(19) Europäisches Patentamt
European Patent Office
Office européen des brevets

(11) EP 1 210 972 A2

(12) **EUROPEAN PATENT APPLICATION**

(43) Date of publication:
**05.06.2002 Bulletin 2002/23**

(51) Int Cl.$^7$: **B01D 71/02**, B01D 61/00

(21) Application number: **01309932.0**

(22) Date of filing: **27.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.11.2000 JP 2000360035**
**19.12.2000 JP 2000385059**

(71) Applicant: **TORAY INDUSTRIES, INC.**
**Tokyo 103-8666 (JP)**

(72) Inventors:
- **Ozeki, Yuji**
**Ichinomiya-shi, Aichi 491-0001 (JP)**
- **Yoshikawa, Masahito**
**Nagoya-shi, Aichi 458-0033 (JP)**
- **Endo, Tomonori**
**Nagoya-shi, Aichi 466-0845 (JP)**

(74) Representative: **Coleiro, Raymond et al**
**MEWBURN ELLIS**
**York House**
**23 Kingsway**
**London WC2B 6HP (GB)**

(54) **Zeolite crystals and membranes and their uses**

(57) A method of coating zeolite crystals which comprises depositing, impregnating or coating a liquid such as an acid to a substrate and then bringing the same into contact with a slurry, sol or solution that contains zeolite crystals.

EP 1 210 972 A2

## Description

BACKGROUND OF THE INVENTION

This invention concerns a method of coating zeolite. A substrate thinly coated with zeolite can be obtained by using the technique of this invention. The substrate can be utilized not only as an adsorbent or a catalyst but also can be a substrate material for obtaining a high performance zeolite membrane. Further, this invention relates to a method of manufacturing a zeolite membrane, a method of processing a zeolite membrane, a zeolite membrane, and a separation method. Zeolite is a crystal of inorganic oxides having a pore diameter at a level of the molecular size. Since this is a crystal, the distribution is extremely uniform and a zeolite membrane formed by zeolite into a membrane is prospective as a high performance separation membrane. This invention also relates to a zeolite membrane of high water repellency and a method of processing for improving the membrane performance, as well as a method of utilizing the processed membrane. Since the crystal interstices are reduced by applying with the processing of this invention to the zeolite membrane, and the deposition of liquid films of hydrophilic substances to the membrane surface can be suppressed, it can be utilized, particularly, as a membrane for the permeation of gas, separation of gas and separation of liquid under the coexistence of hydrophilic substances in vapors or liquids. For example, it can be utilized effectively as a separation membrane for alcohols at low concentration in aqueous solutions, a degassing membrane in water, a hydrogen permeation membrane for use in electrolytic capacitors and a hydrogen separation membrane used for fuel cells.

Zeolite is crystal of inorganic oxide and has pores whose sizes are comparable to the sizes of molecules. Since zeolite is crystal, the pore distribution is uniform. By utilizing the nature, it is generally utilized as a catalyst or an adsorbent with extremely high performance. Zeolite has been used so far mostly being molded into a granular shape. In recent years, research and development have been progressed in the world for coating zeolite on the surface of fibers or honeycomb ceramics for use as adsorbents or catalysts, or synthesizing zeolite in the form of membranes and utilizing them as separation membranes.

Zeolite coated thinly on the surface of ceramics or fibers is advantageous compared with that molded in the granular shape in view of the diffusion of the substance. On the contrary, in existent coating methods, a zeolite-containing slurry and a substrate are merely in contact with each other ,or zeolite is intruded into porous substrates by the means of pressure difference. Recently, a method of coating zeolite crystals with high orientation on a substrate has been reported by K. Yoon, et al (Tetrahedron 56 2000) 6965-6968). This is a method of treating the surface of a substrate and a surface of zeolite particles with a silane coupling reagent containing amino groups, then treating the surface of the substrate with terephthal dicarboxy aldehyde and, subsequently, reacting the amino groups on the surface of the zeolite particles and aldehyde on the surface of the substrate to coat fine zeolite particles on the surface of the substrate. In this method, the zeolite fine particles are coated with high orientation by applying supersonic waves in toluene. While the zeolite particles can be coated thinly with high orientation on the substrate in this method, it involves drawbacks, for example, that the reagent used is expensive and the processing steps are complicated.

In addition, to utilize the zeolite membrane as the separation membrane, densely laid zeolite particles are not a specific membrane by taking the advantageous feature of zeolite, because it is suffered from significant effect of crystal interstices. Therefore, the existent method for synthesizing the zeolite membrane adopts a method of previously coating zeolite crystals (seed crystals) on a porous support and consequently letting the crystals grow. However, there has not been known examples of laying seed crystals thinly and uniformly and reproducibility is poor in the membrane preparation, so that a membrane has to be synthesized to an extremely large thickness in order to provide a high performance separation function. The thick zeolite membrane has poor permeation rate and lacks in practical usefulness as the membrane. It is considered that they may be attributable to that zeolite seed crystals can not be coated on the porous ceramics thinly and uniformly. Further, there have been not known examples of previously coating seed crystals with high orientation and then growing the crystals to obtain an oriented zeolite membrane.

Further, the zeolite membrane is polycrystalline and has interstices between crystals. Further, it may sometimes be distorted to cause cracks during baking. When there are many crystal interstices and cracks in the membrane, the utilizability of the zeolite pores is poor and separation function at high performance derived from the nature of zeolite can not be obtained. Further, the crystal surface of zeolite is a rupture cross-section of crystals and has many OH groups. Accordingly, many OH groups are present on the surface and the crystal interstices of the zeolite membrane.

Accordingly, the existent zeolite membranes have drawbacks that not only an aimed separation performance can't be obtained because of the presence of crystal interstices or cracks but also hydrophilic substances in the gas are deposited to worsen the gas permeation rate because of the hydrophilicity derived from the OH groups on the surface of the zeolite membrane. Particularly, when it is used as a hydrogen permeation membrane for use in an electrolytic capacitor, since ethylene glycol as the ingredient of the electrolyte is deposited as a liquid film on the surface of the membrane, it results in a drawback of incapable of permeating hydrogen evolved at the inside.

As a method of filling crystal grain boundaries or cracks, International Publication No. 1682/96 discloses a

technique of bringing a metal compound and ozone simultaneously into contact with each other on the surface of the membrane to form a metal oxide. This method requires to use ozone, for which an exclusive device is necessary and which increases the cost. Further, the metal compound used in this method is a compound having only the reactive group such as tetraethoxy silane (ethoxy group in the case of tetraethoxy silane) and can not provide a hydrophilic property to the surface of the zeolite membrane although the purpose of filling the crystal interstice can be attained.

SUMMARY OF THE INVENTION

This invention intends to overcome the foregoing problems in the prior art and provide a method capable of coating zeolite uniformly irrespective of the kinds of the substrate.
This invention further intends to provide a zeolite-coated substrate utilizing the coating method described above, a zeolite membrane obtainable by utilizing the same, as well as techniques relevant therewith.
Further, it relates to a technique of not only processing crystal interstices, surfaces and cracks of the zeolite membrane without using ozone to fill crystal grain boundaries or cracks but also providing the surface of the zeolite membrane with hydrophobic property to improve the permeation selectivity.
The constitution of this invention is as described below.
This invention concerns a method of coating zeolite crystals which comprises depositing, impregnating or coating a liquid that contains a compound capable of satisfying at least one of the following compounds (1) to (3) shown below on or into a substrate and then bringing a slurry, sol or solution that contains zeolite crystals into contact therewith:

(1) an acid
(2) an ester that forms carboxylate anions by dissociation and
(3) a metal carboxylate salt that forms carboxylate anions by dissociation.

Further, this invention concerns a substrate containing a layer made of zeolite crystal particles whose thickness is 0.5 μm or less, in which at least one surface of the substrate is covered with the layer made of zeolite crystal particles and the zeolite crystal particles are oriented.
Further, this invention concerns a method of manufacturing a zeolite membrane having the following steps (a) to (c).

(a) a step of coating zeolite crystals by the zeolite crystal coating method as described above,
(b) a step of bringing the coated zeolite crystals into contact with a zeolite precursor and
(c) a step of subsequently crystallizing the zeolite precursor.

Further, this invention concerns a method of processing a zeolite membrane wherein the zeolite membrane is brought into contact with a processing agent having active groups reactive with OH groups and forming inorganic oxides after baking, as well as water and/or steams.
Further, this invention concerns a zeolite membrane having a permeation characteristic that nitrogen permeation is prefered to hydrogen permeation. Further, it relates to a zeolite membrane having a high water repellency, with an angle of contact with water of 70 degrees or more and an angle of contact with ethylene glycol of 65 degrees or more.
This invention also concerns a zeolite membrane manufactured by the method described above in which the type of zeolite is MFI.
Further, this invention concerns a zeolite membrane manufactured by the method described above, a degassing membrane and a separation method using the zeolite membrane having the feature as described above.

BRIEF DESCRIPTION OF THE DRAWINGS

Fig. 1 is a diagram showing pH relation of a solution for preparing a zeolite crystal layer;
Fig. 2 is a cross section of an aluminum electrolytic capacitor;
Fig. 3 is a schematic view for a sealing cap;
Fig. 4 is a photograph of the surface of a seed crystal layer;
Fig. 5 is a chart of a thin membrane XRD of the seed crystal layer;
Fig. 6 is a photograph of a cross-section of the seed crystal layer;
Fig. 7 is a view of a cell for fixing a zeolite membrane;
Fig. 8 is a surface photograph of a seed crystal layer;
Fig. 9 is a chart of a thin membrane XRD of the seed crystal layer;

Fig. 10 is a photograph of the a cross-section of a seed crystal layer;
Fig. 11 is a view of a cell for fixing a zeolite membrane;
Fig. 12 is a view of a device used for the experiment of processing and permeation of a zeolite membrane;
Fig. 13 is a view of a device used for processing a zeolite membrane;
Fig. 14 is a view of a device used for processing a zeolite membrane using tetramethoxy silane;
Fig. 15 is a view of a device used for the experiment of hydrogen permeation;
Fig. 16 is a view of a device used for the experiment of permeation of ethylene glycol;
Fig. 17 is a cross sectional view of a sealing cap;
Fig. 18 is a view of a cell for fixing a zeolite membrane;
Fig. 19 is a view of an apparatus for measuring gas permeation selectivity;
Fig. 20 is a view of an apparatus for measuring liquid permeation selectivity; and
Fig. 21 is a view of an apparatus for measuring gas permeation selectivity.

DESCRIPTION OF THE PREFERRED EMBODIMENTS

This invention is to be described more specifically.

The first invention concerns a method of coating zeolite crystals which comprises depositing, impregnating or coating a liquid that contains a compound capable of satisfying at least one of the following compounds (1) to (3) shown below on or into a substrate and then bringing a slurry sol or solution that contains zeolite crystals into contact therewith:

(1) an acid,
(2) an ester forming carboxylate anion by dissociation, and
(3) a metal carboxylate salt that forms carboxylate anion by dissociation.

Heretofore, coating of zeolite to the substrate has relied on physical deposition and lamination. The present inventors have found that zeolite can be coated extremely uniformly by previously depositing, impregnating or coating a liquid that contains a compound capable of satisfying at least one of (1) to (3) above to or into a substrate and then bringing a slurry or a sol or a solution that contains zeolite crystals into contact therewith.

It is considered for the reason that, when the acid is used, the pH of the liquid near the contact boundary is neutralized by the reaction of the acid and the alkali, the surface potential of the zeolite crystals is lowered, they are coagulated to each other and the acid and the alkali are gelled near the boundary to form a thin layer of zeolite particles.

In this invention, the slurry, the sol or the solution that contains the zeolite crystals is essential and zeolite has pores whose sizes are comparable to the sizes of molecules. The sizes of molecules are within the range of the size of molecules present in the world and preferably is in a range about from 0.2 to 2 nm. Zeolite means crystalline microporous material constituted, for example, of crystalline silicate, crystalline aluminosilicate, crystalline metallosilicate, crystalline aluminophosphate or crystalline metalloaluminophosphate.

There is no particular restriction on the type of the crystalline silicate, crystalline aluminosilicate, crystalline metallosilicate, crystalline aluminophosphate and crystalline metalaluminophosphate and they can include, for example, crystalline inorganic porous material having the structure as described in Atlas of zeolite structure types (W. M. Meiler, D. H. Olson, Ch. Baerlocher, zeolites, 17 (1/2), 1996).

The size of the zeolite crystals may be of several nm so long as they have a zeolite crystal structure. Further, it may be of a large size so long as they can be dispersed in liquid. Since the final purpose of this invention is to prepare an extremely thin zeolite crystal layer, smaller size is preferred. A preferred crystal size is from 3 nm to 10 µm, particularly preferably, from 10 nm to 2 µm. Zeolite can be obtained by a known method. For example, in a case of crystalline aluminosilicate, it can be obtained by hydrothermal synthesis method of mixing and heating a silica source, alumina source, alkali source and water.

The slurry is a dispersion of crystals or particles as a coagulating body of the crystals in a solvent, and the crystals or particles settle with lapse of time. The sol is a liquid dispersion in which the crystals or particles do not settle for a long time. The solution is a material in which the crystals or particles are so small as allowing transmission of visible light and which looks like a homogenous solution where solutes are completely dissolved.

The slurry, sol or solution that contains the zeolite crystals according to this invention is alkaline which can be obtained, for example, by adding and stirring zeolite crystals or particles in an aqueous alkaline solution. The liquid for synthesizing zeolite is usually alkaline and a slurry, sol or solution just after synthesis of zeolite can be used as it is, which is preferred with an economical point of view since the number of steps can be reduced. A slurry, sol or solution of zeolite containing organic cations in the pores is most preferred. This is because the organic cations in the pores and anions of organic acid ,such that carboxylic acid, on the substrate interact with each other to cause orientation such that the pores are directed to the surface.

The feature of this invention is to deposit, impregnate or coat a liquid that contains a compound capable of satisfying at least one of (1) to (3) above on or into a substrate. In this case, the acid may be a proton donator (Br ϕ nsted acid) or an electron pair acceptor (Lewis acid). Further, for depositing, impregnating or coating on or into the substrate, those in the form of a liquid at normal temperature and normal pressure or those solid at a normal temperature but soluble to a solvent such as water are preferred.

For example, the acid can include inorganic acids such as hydrochloric acid, sulfuric acid, nitric acid or carbonic acid, various kinds of organic acids and acidic polymers. The organic acids can include carboxylic acids such as formic acid, acetic acid, propionic acid and benzoic acid, carboxylic acids having hydroxyl groups in the molecule such as lactic acid, glycolic acid and tartaric acid. The acidic polymers can include, for example, polyacrylic acid. Further, the ester that forms the carboxylate anions by dissociation includes carboxylic acids derivatives(RCOOR') those are formed by substituting hydrogen atoms of carboxylic acids(RCOOH) with hydrocarbons (R') (RCOOR'). The pH of liquid, such as water, in which esters are dissolved may be controlled to be acidic or alkaline in order to increase the solubility of the ester that forms the carboxylate anions by dissociation and to promote the dissociating reaction. The ester that forms carboxylate anion by dissociation can include, for example, methyl acetate, ethyl acetate, ethyl lactate, methyl lactate, methyl glycolate and ethyl glycolate with no particular restrictions only to them. Further, the metal carboxylate salt that forms the carboxylate anions by dissociation includes carboxylic acids derivatives(RCOOM) those are formed by substituting hydrogen atoms of carboxylic acids(RCOOH) with metals(M). They can include, for example, alkali metal salts and alkaline earth metal salts such as lithium salt, sodium salt and calcium salt, and transition metal salts such as copper salt, cobalt salt and nickel salt, with no particular restriction only to them. The compounds may be diluted with a solvent. The liquid that contains the compound capable of satisfying at least one of (1) to (3) above preferably has higher viscosity in view of the easy retainability to the inside and the surface of the substrate. There is no particular restriction on the method of depositing, impregnating and coating the liquid on or into the substrate and it may merely be dripped on the substrate, or may use a method of dipping the substrate into the liquid and then pulling up the substrate out of the liquid and, further, any of known methods such as spin coating, spray coating, blade coating or roll coating may also be used.

This invention has a feature in depositing, impregnating or coating the liquid that contains the compound capable of satisfying at least one of (1) to (3) on or ionto the substrate and then bringing the slurry, sol or solution that contains zeolite crystals into contact therewith. The materials used for the substrate have no particular restriction. Organic polymers, ceramics or metals may be used, and hydrophilic materials are preferably used. This is because hydrophilic materials have good affinity with acid or aqueous solution and the compound capable of satisfying at least one of the (1) to (3) above can be deposited, impregnated or coated easily. Particularly, a porous substrate is used preferably since it can easily retain an aqueous solution or acid. There is also no particular restriction on the shape of the substrate. It may be fibrous or granular or may be a molding product such as a plate, tube, honeycomb and monolith.

The method according to this invention has a feature as described above in depositing, impregnating or coating the liquid to the substrate and then bringing the slurry, sol or solution that contains zeolite crystals into contact therewith. There is also no particular restriction on the way of contact. It may be merely dripped on the substrate, or may use a method of dipping and then pulling up the substrate into and out of the slurry, sol or solution that contains zeolite crystals and, further, any of methods such as spin coating, spray coating, blade coating and roll coating may also be used.

The substrate is preferably calcined after being brought into contact with the slurry, sol or solution that contains the zeolite crystals. Particularly, in a case where organic amines or organic ammonium ions are contained in the zeolite pores, the baking step is essential for the effective utilization of the pore structure. In a case where it is used for the synthesis of the zeolite membrane to be described later, since the liquid contained in the substrate may gives an effect on the zeolite synthesis, it may be preferably calcined.

Further, this invention concerns a method of coating zeolite crystals in which the compound capable of satisfying at least one of (1) to (3) shown below is one or more of compounds selected from lactic acid, lactate ester, metal lactate salt, glycolic acid, glycolic ester and metal glycolate salt.

(1)an acid,
(2)an ester that forms carboxylate anion by dissociation,
(3)an metal carboxylate salt that forms carboxylate anion by dissociation

Lactic acid means α-hydroxypropionic acid, β-hydroxy propionic acid, and any of L- body, D-body and DL-body is used preferably in a case of α-hydroxypropionic acid. Further, lactide obtained by dehydration of lactic acid is also used preferably. The lactate ester means an ester form of an α-hydroxypropionic acid or β-hydroxypropionic acid. For example, it can include methyl lactate, ethyl lactate, and propiolactate with no particular restriction only to them. Further, metal lactate salt means a metal salt of α-hydroxypropionic acid or β-hydroxypropionic acid. They can include, for example, sodium lactate and lithium lactate with no particular restriction only to them. Further, glycolic acid has a structural formula: $CH_2(OH)COOH$, which is colorless crystals at room temperature. The glycolic ester means ester

forms of glycolic acid. They can include, for example, methyl glycolic acid and ethyl glycolic acid with no particular restriction only to them. Further, the metal glycolate salt can include, for example, sodium glycolate with no particular restriction only to the same. Among the compounds described above, those which are liquid at normal temperature and normal pressure may be used alone or may be diluted with water, alcohol or ether. Further, the solid state compound may be used by heating to melt or by dissolving in water, alcohol or ether.

Further, this invention relates to a method of coating zeolite crystals in which the following relations (a) and (b) are established between pH of a liquid for depositing, impregnating or coating on a substrate ($pH_1$) and pH of a slurry, sol or solution that contains zeolite crystals ($pH_2$).

(a) $11 < (pH_1)+(pH_2) < 17$
(b) when $pH_1 < 7$, $pH_2 > 7$, when $pH_1 > 7$, $pH_2 < 7$

Fig. 1 is a graph showing a relation between $pH_1$ and $pH_2$. As can be seen from Fig. 1, in a case where the liquid previously deposited, impregnated or coated to a substrate is acidic, the slurry, sol or solution that contains zeolite crystals has to be alkaline. On the other hand, when the solution previously deposited, impregnated or coated to the substrate is alkaline, the solution containing the zeolite crystals has to be acidic. This is because the liquid deposited, impregnated or coated on the substrate and the slurry, sol or the solution that contains zeolite crystals are subjected to neutralizing reaction to form a neutralized region near the liquid boundary in which charges on the surface of the zeolite crystals are lowered thereby selectively to coagulate the zeolite crystals near the boundary. For the neutralizing reaction, it is preferred that the acidity and the alkalinity are at an identical level although depending on the amount of the liquid to be used. As a method of measuring the pH of the solution, slurry or sol, any of generally known methods is applicable. For example, it can include a measuring method of using pH test paper or a method of using pH measuring equipment using a buffer electrode.

Further, the second invention of the present application concerns a substrate containing a layer made of zeolite crystal particles ,and the thinckness of the layer is 0.5 μm or less and in which at least one surface of the substrate is covered with the zeolite crystal layer with high orientation of zeolite crystals. The substrate of this invention can be attained by the method described above when the specific conditions are satisfied. In the substrate containing the layer made of zeolite crystal particles, different from the zeolite membrane to be described later, the zeolite crystal particles are generally independent of each other and have grain boundary between the particles. This invention concerns a substrate having a zeolite crystal layer whose thickness is 0.5 μm or less, which can be determined by electron microscopic observation for the cross section of the zeolite coating substrate. It can be confirmed that the thickness from the surface of the substrate is 0.5 μm or less by observation using a field effect radiation type scanning electron microscope (FE-SEM) by the magnification rate of about 10,000 times. The substrate is not usually planar but unevenness is present on the surface. It is a feature of this invention that the thickness from the uppermost surface is 0.5 μm or less. When the thickness of the coating layer is 0.5 μm or more, cracks tend to be formed in the coating layer by an abrupt thermal hysteresis. This invention has a feature in that a thin coating layer uniformly covers the surface of the substrate, which can be judged that a thin coating layer is continuous also from the photograph for the cross-section. Further, coating of at least one surface of the substrate by the zeolite crystal layer in this invention can also be judged by observation of the coating surface layer by FE-SEM under magnification rate of 10,000 from the surface and by the state where the substrate is coated with zeolite particles to such an extent as the surface shape of the substrate can not be observed at all with the size of 5 μm width and 3 μm length. Further, it is a feature of this invention that the crystal particles in the layer are oriented. Whether the crystals are oriented or not can be judged by thin membrane X-ray diffractometry. Specifically, X-ray diffraction is measured for the surface coated with zeolite crystals by using CuKα for an X-ray source (wavelength: 0.154 nm), at a fixed incident angle of 3° with a scanning speed of 2θ 4°/min by a parallel optical system.

When each peak intensity ratio in the thus measured X-ray diffraction pattern is different from the powdery X-ray diffraction pattern for the zeolite species, it can be judged that the crystal particles are oriented. Although the reason why the crystal particles are oriented is not apparent but it may be considered that since the compound coated previously on the surface interacts with alkali and organic cations present in the pores of the zeolite, a specified face of the crystals is directed to the substrate. The material described above is constituted of a substrate on which the zeolite is coated thinly and extensively which has extremely high utilization efficiency for zeolite, in which the pores are oriented at a high ratio to the surface and which is extremely useful as a catalyst or an adsorbent. When the substrate is fibrous, it can be formed into a sheet by a paper making process or the like and can also be formed into a honeycomb structure by corrugating fabrication. The zeolite crystals can be coated on a ceramics honeycomb or tube by the method of the invention as mentioned previously and can be used as a substrate containing the zeolite crystal layer described in this invention.

This invention relates to a porous substrate containing a layer made of zeolite crystal particles in which the substrate is porous. "Porous" means a pore structure in which a plurality of pores are opened in the substrate and the

pores are in contact with each other to form a porous structure in the substrate. There is no particular restriction on the pore size and pores of a size equal with or less than that of the crystals to be coated are used preferably.

In a case where zeolite crystal particles are coated to the porous substrate by the method according to this invention, when the liquid contained in the porous substrate permeates through the substrate, the layer made of zeolite crystal particles is also present in the pores of the substrate. Such a zeolite crystal coating layer is preferred since it has many points of contact with the substrate and excellent in view of the strength.

Further, this invention relates to a substrate containing MFI type zeolite crystals capable of satisfying the following relations (A) and (B), when the X-ray diffraction is measured by using CuK$\alpha$ for the X-ray source (wavelength at 0.154 nm) to the zeolite coating surface, with an incident angle being set to 3° and at a scanning speed of 2$\theta$ 4°/min in a parallel optical system:

(A) a/b = 0.3 to 1.5
(B) b/c > 4.4

where

a represents a peak intensity for the maximum peak in $2\theta = 7.3 - 8.2°$,
b represents a peak intensity for the maximum peak in $2\theta = 8.5$ to $9.1°$ and
c represents a peak intensity for the maximum peak in $2\theta = 13.0 - 14.2°$ :

The substrate coated with the MFI zeolite by the method described above sometimes shows orientation as described above by merely coating. The peak intensity ratio in the X-ray diffractometry of the MFI type zeolite is generally: a/b = 1.5 - 3, b/c < 4. Accordingly, it can be seen from the peak intensity ratio of this invention that the crystals are oriented with a specified surface being directed to the substrate. The orientation is a or b axis orientation with the pore open face being directed upward and this is a preferred orientation in the sense of utilizing zeolite pores. Although it is not clear at present why such orientation is obtained, it may be considered, for example, that ammonium ions are present in the zeolite pores in the synthesis of zeolite by using an organic ammonium hydroxide and orientation is caused by the interaction between the liquid coated to the support and the alkali in the zeolite pores upon coating of the zeolite crystals in the method as described above. It may also be considered that orientation is caused by the interaction between the organic cations in the zeolite pores and anions, such as carboxylate anion, on the substrate. The thus oriented zeolite crystal coating layer is extremely useful as a substrate for the synthesis of an oriented zeolite membrane. While preparation methods of zeolite membranes by growing the not oriented particle layer have been known, a zeolite membrane prepared by crystal growth of the oriented zeolite particles is novel.

Further, the third invention concerns a method of manufacturing a zeolite membrane comprising (a) a step of coating zeolite crystals by the method described above, (b) a step of bringing the coated zeolite crystals into contact with a zeolite precursor and (c) a step of subsequently crystallizing the zeolite precursor. The first step (a) in this invention is as has been described above and it is essential that the substrate is porous in a case of using the zeolite membrane with an aim of permeation such as a degassing membrane or a separation membrane.

The substrate used in this invention is used for preventing a portion of the thin, weak or brittle zeolite layer from being broken. when the layer made of zeolite crystal particles or the zeolite membrane is used as a permeation membrane, it is preferred that the substrate is porous and rigid.

In a case of an easily flexible substrate, it can not sometimes protect the zeolite membrane against breakage. When the zeolite membrane or the layer made of zeolite crystal particles is used as an adsorbent or a catalyst, cracks or defects are allowed unless the membrane is not peeled off the substrate. However, in a case of using the zeolite membrane as a permeation membrane, particularly, as a separation membrane, it is necessary to avoid cracks or defects as much as possible and a substrate membrane of such a low strength that the substrate itself is easily broken upon finger touch is not suitable to the industrial practical use.

Further, when the zeolite membrane is used as a permeation membrane, it is desirable that a supporting substrate has such a porosity as not hindering the permeability of the zeolite membrane.

There is no particular restriction on the material of the substrate so long as it has the properties as described above and the material can include, for example, metals, ceramics, such as metal oxides, carbon and organic polymers. Metals and ceramics such as metal oxides, metal nitrides and metal carbides are used preferably in view of the strength and the rigidity. Among them, ceramics are used particularly preferably with a view point of heat resistance and chemical resistance. Metal oxides are used most preferably because of the small difference of the heat expansion coefficient with that of the zeolite layer and high affinity with the zeolite layer. There is no particular restriction on the kind of the metal oxides and alumina, zirconia, silica, mullite, cordierite, titania, zeolite or zeolite-like material can be used preferably. The example of the metal can include a substrate made of stainless steel (sintered metal). In the application use not requiring heat resistance, a substrate made of an organic polymer may also be used so long as it has rigidity.

Also in this case, those having such a rigidity that the substrate is not bent, when observed visually, upon bending manually in order to prevent the zeolite membrane portion from breakage in a case where it is used as a permeation membrane.

There is also no particular restriction on the shape of the substrate and those of the shape marketed usually, such as fiber, cloth, sphere, plate, tube, monolith and honeycomb can be utilized. When it is used as a permeation membrane such as a separation membrane, porosity and large surface area are required and the shape of tube, monolith or honeycomb is preferred. Any of commercial products may be used for the substrate.

In a case of the porous substrate, the pore diameter is important. In a case of a porous ceramic material, the pore diameter can be controlled depending on the baking after molding, size of the particles used and the post treatment.

There is no particular restriction on the method of manufacturing the porous substrate used in this invention and it can be, usually, adopted a method of extrusion molding a powder such as of ceramics as it is or with addition of a molding aid or a binder to the powder of ceramics, or press molding them and by way of steps such as drying and baking.

The optimal baking temperature varies depending on the material of the porous substrate and a temperature at which sintering begins to some extent is desirable in view of the strength in a case of a metal oxide material. A suitable baking temperature is generally from 600 to 2000°C, preferably, from 800 to 1500°C and, particularly preferably, from 900 to 1400°C, while this is different depending on the material and the size of the particles. Processing such as cleaning with a chemical solution may also be applied before and after the baking. Further, it is preferably conducted to coat fine particles to the molded porous substrate by a method such as dip coating, control the pore diameter of the porous support, control the affinity with the zeolite crystal layer or control the surface roughness. Such a layer formed by the coating is referred to as an intermediate layer and the intermediate layer is preferably disposed by one or more layer.

When the pore diameter of the porous substrate is too large, the zeolite crystal layer or the zeolite membrane does not form a membrane but causes holes, or a slurry, a sol or solution that contains zeolite crystals or a solution of zeolite material excessively permeates into the pores of the porous support to finally clog the pores of the porous support by the zeolite layer. That is, since the permeating distance of the gas through the zeolite layer is excessively long, it sometimes leads to a drawback that no sufficient permeation amount of gas can be obtained. Therefore, the mean pore diameter of the porous support depends on the particle diameter of the zeolite to be coated and, in a case of coating the zeolite particles having a particle diameter of about 100 nm, the pore diameter of the porous substrate is preferably 10 μm or less, further preferably, 5 μm or less, further more preferably, 1 μm or less and, particularly preferably, less than 0.5 μm. The intermediate layer described above is utilized preferably also in view of controlling the pore diameter. The lower limit for the mean pore diameter differs depending on the size of molecules to be permeated and can not be determined generally but the average pore diameter is preferably 0.01 μm or more with a view point of a desired permeability of the molecules. The coating method described previously, that is, the method of the first step according to this invention has a feature that the zeolite crystal layer can be coated on the surface of the substrate relatively uniformly not depending on the pore diameter of the support.

The mean pore diameter of the porous substrate can be measured usually by using a mercury porosimeter. Conveniently, when the size of the ceramic particles constituting the intermediate layer is uniform, the size of such particles may be considered substantially identical with the mean pore diameter.

In the method of manufacturing the zeolite membrane according to this invention, the layer made of zeolite crystal particles formed in the first step may be formed on any portion of the porous support. The functional layer can be formed to one or both of the surfaces, inside or both of the surface and the inside of the porous support. When the zeolite layer is formed, it is preferred to coat the layer on the surface of the porous substrate in view of the control for the thickness of the layer made of zeolite crystal particles and it is preferably coated in the inside or on the surface of the porous support thinly, preferably, at 1 μm or less in view of the strength of the zeolite layer. Further, in a tubular porous support, it may be coated on the inner wall or coated on the outer wall. Also in a case of a monolith or honeycomb porous substrate, the functional layer may be formed at any portion and coating on the inner wall is preferred since this can increase the surface area.

In the second step of this invention, the crystal particle layer of zeolite is disposed on the substrate and then brought into contact with a zeolite precursor. Before contact with the zeolite precursor, the substrate coated with the zeolite crystal particles may be calcined or cleaned. Baking is preferred in order to avoid the effect of the liquid impregnated into the substrate upon manufacture of the zeolite membrane. In the case of baking, a slower temperature elevation rate is more preferred. An optimal temperature elevation rate varies depending on the thickness of the zeolite crystal coating layer and a thinner layer can endure a higher temperature elevation rate. As described above, if the coating layer is as thin as 1 μm or less, no large cracks are formed in the coating layer even at a high temperature elevation rate of about 10°C/min. Since the baking is conducted for avoiding the effect of the acid used, the baking temperature is preferably higher than the boiling point of the acid. When it is calcined at an excessively high temperature, cracks may sometimes occur due to the difference of the expansion coefficient between the substrate and the zeolite

layer. Further, the zeolite structure may sometimes be broken. Accordingly, the calcination temperature is preferably 700°C or lower and, further preferably, 600°C or lower.

There is no particular restriction on the method of contacting the zeolite precursor, and the method can include, for example, a method of impregnating the substrate into a zeolite precursor, a method of dripping a zeolite precursor to the substrate and a method of spray coating, spin coating, blade coating or roll coating. In this invention, since zeolite crystals are densely laid before contact with the zeolite precursor, the crystals are grown to fill the interstice between the crystals to densify the structure. Accordingly, so long as the zeolite precursor can impregnate between the crystals of the previously coated zeolite crystal layer, any method can be adopted. The zeolite precursor is a mixture which can form a zeolite by heating or the like for a predetermined time and includes a silica source, an alkali source, an organic template and water. An alumina source is optionally included. Silica and water are essential and other components are different depending on the type of the zeolite to be prepared.

Examples for the silica source, the alkali source, the organic template and the alumina source are shown below with no particular restrictions thereto.

As the silica source, colloidal silica, fumed silica, water glass, precipitation silica and silicon alkoxide are used. The alkali source can include hydroxides of alkali metals such as sodium hydroxide, lithium hydroxide and potassium hydroxide.

The organic template is a forming agent of an organic compound for constructing the pores of zeolite and quaternary ammonium salts such as tetraethyl ammonium hydroxide, tetrapropyl ammonium hydroxide and tetrabutyl ammonium hydroxide, or crown ether and alcohol are used.

The alumina source is necessary when preparing crystalline aluminosilicate zeolite. For example, boehmite, pseudo boehmite as alumina hydrate, aluminum salt such as aluminum nitrate, aluminum sulfate and aluminum chloride or aluminum hydroxide, aluminum oxide or aluminum alkoxide can be used. There is no particular restriction on the aluminum source used in this invention and boehmite and pseudo boehmite are used preferably. The boehmite to be used herein means alumina hydroxide represented by AlO(OH). This is obtained from aluminum hydroxide ($Al(OH)_3$) by treating with hot water at 150 to 375°C. Depending on the temperature for the heat treatment and the concentration of steams upon hot water treatment, alumina hydroxides having other structures are mixed. They are referred to as pseudo-boehmite. As commercial products, Pural manufactured by Condea Co. is known.

In the third step of this invention, the zeolite precursor is crystallized. The method includes a method of impregnating a substrate in a precursor and put to a hydrothermic treatment (for example, in Japanese Patent Laid-Open No. 109116/1995), and a method of coating the precursor on the surface of a substrate followed by drying and then treating it with steams or organic amine vapors (steam method) (for example, in Japanese Patent Laid-Open No. 89714/1995). The steam method is preferred having an advantage capable of decreasing the amount of liquid wastes since only the required amount of the precursor can be coated on the support. There is no particular restriction on the crystallizing temperature and 80 to 200°C is preferred. In the method according to this invention, since zeolite crystals are previously laid densely and they are slightly grown to densify, they can be crystallized at a lower temperature and a shorter period of time than in usual zeolite crystallization. In any case, when the temperature is higher than 100°C, since the process is conducted under a pressurized condition, a pressure resistant vessel is used.

The three steps in the method of manufacturing the zeolite membrane according to this invention may be repeated by optional times. When the step is repeated twice or more, the zeolite membrane is more densified preferably.

The zeolite membrane in this invention means those formed from zeolite crystals into a membrane having no substantial grain boundaries between the crystals. They are of a form in which crystals are put to intracrystal growing to each other and the intracrystal grows join continuously on the support. If grain boundaries or pinholes are present in the membrane, it is not preferred since the permeation selectivity is lowered. No substantial presence of grain boundary means those showing a permeation rate of more than Knudsen diffusion, for example, when single gas permeation rate is compared for hydrogen and $SF_6$.

The zeolite membrane after forming may be applied with treatment such as washing with water and, drying and baking. Whether the zeolite membrane is formed or not can be confirmed by using a thin membrane X-ray diffraction apparatus. When the formed zeolite membrane is calcined, the temperature is elevated for a time as long as possible in order not to form cracks. The temperature elevation rate is preferably 3 °C/min or less, more preferably, 2°C/min or less and, particularly preferably, 1°C/min or less. Naturally, also the temperature falling rate is preferably lower. The temperature lowering rate is 5°C/min or less, more preferably, 3°C/min or less and, particularly preferably, 2°C/min or less. The calcination temperature is generally about 150 to 600°C.

Zeolite sometimes has ion exchanging sites and there is no particular restriction on cations for substituting the ion exchange sites. For example, any of cations such as $H^+$, $Li^+$, $Na^+$, $K^+$ $Rb^+$, $Cs^+$, $Ca^{2+}$, $Mg^{2+}$, $Ba^{2+}$, $Ag^+$, $Cu^{2+}$, $Cu^+$, $Ni^{2+}$ and $La^{3+}$ can be exchanged and any material may be intruded to the ion exchange sites.

Further, this invention concerns a method of manufacturing a zeolite membrane in which the type of zeolite is MFI. So long as the structure is the MFI type, $SiO/AlO_3$ ratio thereof is not restricted particularly. For example, silicalite having an infinite $SiO_2/Al_2O_3$ ratio is used preferably for an application use for separating a hydrophobic substance

from a hydrophilic substance. Further, ZSM-5 having ion exchange sites with the $SiO_2/Al_2O_3$ ratio of about 20 to 200 is used preferably for the purpose of introducing metal ions to the ion exchange sites and controlling the affinity with an object to be separated as described above.

Further, the fourth invention provides a method of processing a zeolite membrane by bringing the zeolite membrane into contact with a processing agent having active groups reactive with OH groups and forming inorganic oxides after baking, and water/or steam.

The feature of the method of processing the zeolite membrane in this invention is to bring the zeolite membrane into contact with a processing agent having active groups reactive with OH groups and forming inorganic oxides after baking, water and/or steam. The state of water to be in contact may be any of solid, liquid or gas state and, preferably, a liquid or gas state. The temperature of contact may be at any level and it is preferably 0°C or higher and, more preferably, 0°C or higher and 200°C or lower in view of easy handling. Water and/or steam is preferably introduced before or after contact with the metal compound. Particularly, a method of bringing a processing agent having reactive groups reactive with OH groups and forming inorganic oxides after baking and a zeolite membrane in contact with each other and then in contact with water and/or steam is used preferably. This is because when the processing agent having active groups reactive with OH groups and forming inorganic oxides after baking, water and/or steam are brought into contact with each other simultaneously, reaction between water and the processing agent occurs preferentially to the reaction between the surface of the zeolite membrane and the processing agent to form an inorganic oxide layer of poor permeability on the surface of the zeolite membrane. When contacting the processing agent with the zeolite membrane and then with water and/or steam, the processing agent reacts with OH groups on the surface of the zeolite membrane and then unreacted active groups of each processing agent are formed into a network with introduced water and processing is possible with no remarkable hindrance to the permeation performance of the zeolite membrane itself.

There is no particular restriction on the way of bringing the processing agent and the zeolite membrane into contact with each other. It may be brought into contact in the form of liquid or vapor. In the case of using the liquid form, the processing agent may be used as it is or may be dissolved in a solvent.

Further, the method of processing the zeolite membrane according to this invention preferably adopts a method of bringing one surface of the zeolite membrane into contact with the processing agent and reducing the pressure on the other surface of the zeolite membrane lower than that at the surface in contact with the processing agent. There is no particular restriction on this method and it can include, for example, a method of bringing the processing agent in contact with one surface of the zeolite membrane and increasing the pressure on the side of the processing agent, a method of bringing vapors of the processing agent in contact with one surface of the zeolite membrane and increasing the pressure on the side of the processing agent with a carrier gas, a method of bringing the processing agent in contact with one surface of the zeolite membrane while evacuating the other surface of the zeolite membrane or a method of bringing one surface of the zeolite membrane into contact with vapors of the processing agent and evacuating the other surface of the zeolite membrane thereby lowering the pressure on the side opposite to that in contact with the processing agent. The carrier gas is selected from gases not reactive with the processing agent, and those having a molecular diameter smaller than that of the zeolite pores are preferred.

The pressure difference between the surface in contact with the processing agent and the other surface has no particular restriction so long as the pressure difference may be caused which may be preferably 50 KPa or more and, more preferably, 100 KPa or more. The temperature upon contact with the processing agent may be at any level so long as it is within a range that the processing agent is not decomposed and, preferably, it is 20°C or higher and 150°C or lower.

There is no particular restriction on the processing agent in this invention so long it has active groups reactive with OH groups and forms inorganic oxides after baking. The processing agent may preferably be liquid at a normal temperature in view of handling. The state upon contact is preferably liquid or gas. It is preferred to contact the agent having high vapor pressure as vapors or contact the agent having low vapor pressure as liquid in view of easy processing. The solid agent is preferably dissolved into a solvent and brought into contact as a liquid. Also the liquid agent may be dissolved in a solvent for contact. The processing agent in this invention can include, for example, tetraalkoxy silane, tetraalkoxy titanium, metal halide and metal nitrate. Specifically, the agent can include, for example, tetramethoxy silane, tetraethoxy silane, tetrapropoxy silane, tetapropoxy titanium, silicon tetrachloride and barium nitrate.

As the processing agent, those represented by (I) or (II) can be used preferably.

(I) $R_x - M1 - X_{4-x}$

(II) $R_y - M2 - X_{3-y}$

R is an alkyl group or aryl group, preferably, an alkyl group. There is no particular restriction on the alkyl group

so long as it is a compound containing carbon and hydrogen and those containing fluorine in addition to carbon and hydrogen are preferred. This is because the hydrophobic property of the membrane is improved by the containment of fluorine. There is no particular restriction on the number of carbon atoms in the alkyl group and it is preferably 1 or more and 20 or less and, further preferably, 3 or more and 20 or less. Those having greater number of carbon atoms are preferred since the hydrophobic property is increased. $M_1$ represents any one of titanium, silicon and germanium, and $M_2$ represents boron or aluminum.

There is no particular restriction on X so long as it is an active group and it is preferably an amino group, alkoxy group, hydroxy group, proton or halogen, preferably, alkoxy group, hydroxy group or halogen. The alkoxy group is most preferred because of easy handlability. There is no particular restriction on the alkoxy group and those having 4 or less carbon atoms are preferred, for example, ethoxy group or methoxy group. This is because an alkoxy group having less number of carbon atoms has a high reactivity with OH groups on the zeolite membrane and easy to react with.

x is 0, 1, 2 or 3, preferably, 1 or 2 and, most preferably, 1. y is 0, 1 or 2, preferably 1 or 2 and, further preferably 1. This is because such a compound not only has a hydrophobic group but also has two or three active groups, can be formed as a network and can easily fill cracks and crystal grain boundaries.

The processing agent includes, for example, silanes such as silane, alkyl silane, aryl silane, alkoxy silane, vinyl silane and amino silane, aluminum compounds such as alkyl aluminum, aryl aluminum and alkoxy aluminum, germanium compounds such as alkyl german, aryl german, alkoxy german and amino germanium, titanium compounds such as alkyl titanium, aryl titanium, alkoxy titanium, vinyl titanium and amino titanium, and boron compounds such as boron alkoxide, alkyl boride, aryl boride and amino boride. Further, the processing agent is preferably represented by (III) or (IV):

(III)

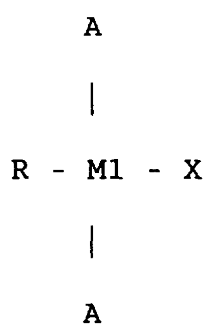

(IV)

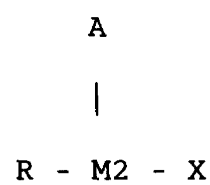

in which R represents an alkyl group or an aryl group in which hydrogen is partially or entirely substituted by fluorine. There is no particular restriction on the number of carbon atoms in the alkyl group and it is preferably 1 or more and 20 or less and, more preferably, 3 or more and 10 or less. It is considered that those having a greater number of carbon atoms have higher hydrophobic property and give more effect in the improvement of the hydrophobic property. However, it may be considered that the high bulkiness hinders the diffusion of the substance that permeates the membrane near the surface of the membrane to lower the permeating rate. Accordingly, those having a greater number of carbon atoms are preferably used in the application use in which the water repellency is important, while those with less number of carbon atoms are preferably used in the application use in which the permeation rate is important.

A represents an alkyl group, aryl group, methoxy group, ethoxy group or chlorine, preferably, alkyl group and, particularly preferably, methyl group or ethyl group. In this invention, the portion X in the processing agent (III) or (IV) reacts with the zeolite membrane and the portion R has a function of increasing the water repellency of the surface of the membrane. In a case where the portion A is a methoxy group, ethoxy group or chlorine, coupling agent bonded on the surface of the zeolite membrane is polymerized to each other to form a strong coating layer, whereas it has a large effect for hindering the permeation of substance. In a case where the portion A is an alkyl group or aryl group, it becomes bulky as the number of carbon atoms increases to hinder the diffusion of the permeation of substance at the surface of the zeolite membrane. With the reasons described above, a methyl group or an ethyl group having low reactivity and with a smaller number of carbon atom is used preferably for the portion A.

X represents an ethoxy group, a methoxy group, a hydroxy group or chlorine. M1 represents one of titanium,

silicon or germanium and M2 represents one of boron or aluminum.

Further, those processing agents from (I) to (IV) having a structure in which R is represented by (V) is preferred.

(V) CF3 $(CF_2)_n$ $(CH_2)_m$,

where n is an integer from 0 to 7 and m is an integer from 0 to 3. The total number of carbon atoms is any one of 1 to 11. It is considered that as the number of carbon atoms is larger, the hydrophobic property increases to provide a greater effect for the improvement of the water repellency but it is also considered that greater bulkiness hinders the diffusion of the substance that permeates the membrane near the surface of the membrane to lower the permeating rate. Accordingly, those having a greater number of carbon atoms are preferably used in the application use in which the water repellency is important, whereas those having a less number of carbon atoms are preferably used in the application use in which the permeating rate is important. The coupling agent having a greater number of carbon atoms can include (hepta decafluoro 1,1,2,2-tetrahydrodecyl) dimethyl chlorosilane, (hepta decafluoro-1,1,2,2-tetrahydrodecyl) methyldichlorosilane and (heptadecafluoro-1,1,2,2-tetrahydrodecyl) trichlorosilane in which n = 7 and m = 2. It can also include (tridecafluoro-1,1,2,2-tetrahydrooctyl) dimethylchlorosilane, (tridecafluoro-1,1,2,2-tetrahydrooctyl) methyldichlorosilane and (tridecafluoro-1,1,2,2-tetrahydrooctyl)trichlorosilane, in which n = 5, and m = 2. The coupling agent with a smaller number of carbon atoms can include, (3,3,4,4,5,5,6,6,6-nonafluorohexyl) dimethyl chlorosilane, (3,3,4,4,5,5,6,6,6-nonafluorohexyl) methyldichlorosilane, (3,3,4,4,5,5,6,6,6-nonafluorohexyl) trichlorosilane, in which n = 3 and m = 2. Further, they can also include (3,3,3-trifluoropropyl) dimethylchlorosilane, (3,3,3-trifluoropropyl) methylchloro silane and (3,3,3-trifluoropropyl) trichlorosilane, in which n = 1 and m = 2.

Further, the fifth invention concerns a method of processing a zeolite membrane which comprises bringing a zeolite membrane and a processing agent having functional groups capable of reacting with silanol groups in the zeolite into contact with each other in the absence of water and then applying a heat treatment and/or depressurizing treatment. When the zeolite membrane and the coupling agent are brought into contact with each other under the absence of water, the silanol groups on the surface of the zeolite membrane and the coupling agent are reacted, whereas polymerizing reaction between the coupling agent to each other does not take place since the functional groups of the coupling agent has no functional groups that cause condensing reaction. Accordingly, after bringing the zeolite membrane and the coupling agent under the absence of water into contact with each other, the coupling agent not reacted with the silanol groups on the zeolite membrane can be removed by a heat treatment and/or depressurizing treatment. In this processing, since the polymerizate is not deposited on the surface of the zeolite membrane except for the coupling agent reacted with the silanol groups on the surface of the zeolite membrane, the chemical property on the surface of the zeolite membrane can be changed without greatly lowering the permeation rate of the zeolite membrane. For the coupling agent used in this processing, those having only one site capable of reacting with the silanol group in the molecule are used preferably. They can include, for example, monochlorosilane, monoalkoxysilane and monohydroxysilane.

The processing method of the zeolite membrane described above is applicable to the zeolite membrane manufactured by any manufacturing method. As described above, it may be a zeolite membrane prepared after coating fine zeolite particles or it may be formed by preparing a zeolite membrane directly on a substrate without using seed crystals. A zeolite membrane manufactured after coating fine zeolite particles is preferred. This is because the zeolite membrane prepared after coating the fine zeolite particles has less grain boundaries and cracks although the membrane thickness is relatively thin and excellent in the permeation performance. The processing effect is more remarkable when processed into a membrane of excellent permeation performance.

The sixth invention relates to a zeolite membrane in which the permeation rate of pure nitrogen is greater than the permeation rate of pure hydrogen. In the invention described previously, the permeation rate of pure nitrogen is unexpectively higher than the permeation rate of pure hydrogen in the zeolite membrane prepared under specified preparing conditions. In the gas permeation mechanism of a porous membrane, there is no permeation selectivity depending on gas species in a viscous flow mechanism of high permeating rate. In the Knudsen diffusion mechanism in which the permeating rate is high next to the viscous flow, since the permeation selectivity is in inverse proportion with the square root of the molecular weight, the permeation rate for hydrogen is higher than that for nitrogen. Further, in the molecular sieve mechanism, since molecules of smaller molecular diameter permeates preferentially, it is considered that the permeation rate for hydrogen is higher than that for nitrogen. In the membrane according to this invention, the permeation rate of nitrogen is higher than that of hydrogen, which does not agrees with the result anticipated from the permeation mechanism described above. Although the reason why the permeation rate of nitrogen is higher than that of hydrogen as in this invention is not apparent but it may possibly be attributable to the surface diffusion mechanism. In the surface diffusion mechanism, gas species adsorbed in the pores of the zeolite move in the pores at a rate higher than that of gas species that diffuse by activation. Since nitrogen is adsorbed in the pores more easily than hydrogen, there is a possibility that the phenomenon in this invention may be caused by the surface diffusion mechanism.

The zeolite membrane according to this invention has an angle of contact with water of 70° or more and an angle of contact with ethylene glycol of 65° or more. The angle of contact on the surface of zeolite membrane with

water and ethylene glycol undergoes the effect of hydrophilic/hydrophobic property of zeolite and the hydrophilic/hydrophobic property of zeolite is due to the silica/alumina ratio in the structure. A zeolite membrane having a silica/alumina ratio as low as 20 or less shows a hydrophilic nature for the pore structure itself. On the other hand, a zeolite membrane having a silica/alumina ratio as high as 50 or more shows a hydrophobic nature for the pore structure itself. However, even in the zeolite membrane having the silica/alumina ratio as high as 50 or more, crystal defects are present at a high density on the surface of the membrane and silanol groups are present in the defective portion. Since the silanol group exhibits a hydrophilic property, the hydrophobic property on the surface of membrane is low even in a zeolite membrane of high silica/alumina ratio. For example, even a silicalite membrane which is an all silica zeolite, those manufactured by a generally known synthesis method have an angle of contact of the membrane surface with water of 50° or less. The zeolite membrane in this invention is synthesized and/or processed aiming at the improvement of the water repellency on the surface of the membrane, and shows an angle of contact with water of 70°C or more. The angle of contact with water means herein an angle formed at the boundary between the zeolite membrane and water surface and an angle present in the inside of the water. The measuring method is described below. A water droplet is dripped to the surface of the zeolite membrane and stood as it is till the movement on the surface of the water droplet is settled. Then, the boundary between the zeolite membrane and the droplet is observed in the lateral direction at 90° relative to the surface of the membrane along the direction where the zeolite membrane is seen as horizontal, to measure the angle formed between the surface of the zeolite membrane and the water droplet. The measurement may be conducted on the site by a protractor, or the boundary between the zeolite membrane and the water droplet may be photographed and the angle may be measured based on photograph. Further, the zeolite membrane of this invention shows an angle of contact with ethylene glycol of 65° or more. The method of measuring the angle of contact with ethylene glycol is also identical with the method of measuring the angle of contact with water described above.

This invention relates to a zeolite membrane in which the concentration of fluorine atoms on the surface of the zeolite membrane is $5 \times 10^{-7}$ mol/m$^2$ or more. Fluorine present on the surface of the zeolite membrane referred to herein means all fluorine including those contained in a compound reacted directly with silanol groups on the surface of the zeolite membrane, those contained in the compound deposited on the surface of the zeolite membrane and those contained in the substance filling the inside of the grain boundaries and the cracks of the zeolite membrane, which are present near the surface of the zeolite membrane. There is no particular restriction on the form for the presence of the fluorine atoms but compounds containing groups in which hydrogen atoms in the alkyl group or aryl group are partially or entirely substituted by fluorine atoms have a high hydrophobic property and such compounds are used preferably since they increase the water repellency of the zeolite membrane when present on the surface of the zeolite membrane. Among them, those silane coupling agents containing groups in which hydrogen atoms in the alkyl group or aryl group are partially or entirely substituted by fluorine can react with the silanol groups on the surface of the zeolite membrane and can improve the water repellency on the surface of the zeolite membrane without greatly lowering the permeation amount of the zeolite membrane, so that they are used preferably. Furthermore, since the compounds can polymerize at the grain boundary and the cracked portion on the surface of the zeolite membrane, it can improve the water repellency on the surface of the zeolite membrane, as well as also contribute to the improvement of the denseness of the zeolite membrane to improve the permeation selectivity, so that they are used preferably.

For the method of measuring the concentration of fluorine atoms on the surface of the zeolite membrane, any of the elemental analysis methods known generally can be used. For example, the atomic ratio from the surface to the depth of 5 to 10 nm of a specimen can be determined by an ESCA (electron spectroscopy for chemical analysis) method as a kind of electron spectroscopy. The ratio of the entire silicon atomic weight to the fluorine atomic weight in the region or the ratio of the atomic weight at the center of the coupling agent and the silicon atom weight due to zeolite are determined, and the concentration of the fluorine atoms per unit area can be calculated based on the values described above. Further, as an another method, there can be mentioned a method of stripping the vicinity of the surface layer of a zeolite membrane to obtain a powdery sample and then calculating the amount of fluorine by a usual elemental analysis method to calculate the fluorine concentration per unit area based on the stripped off area of zeolite. Since no water repelling effect can be obtained if the fluorine concentration is excessively lower, it is preferably $5 \times 10^{-7}$ mol/m$^2$ or more. On the contrary, if the concentration is excessive, there is a possibility that a polymer containing fluorine atoms is formed on the surface of the zeolite membrane, so that it is preferably $5 \times 10^{-2}$ mol/m$^2$ or less.

The seventh invention relates to an aluminum electrolytic capacitor mounted with the zeolite membrane described above or a degassing membrane.

The zeolite membrane in this invention is extremely useful as a degassing membrane or a separation membrane. The degassing membrane is a membrane of driving off gases evolved by decomposition of contents in a vessel or driving off gaseous ingredients dissolved in the liquid. Zeolite includes hydrophobic zeolite and hydrophilic zeolite, and the hydrophobic zeolite is preferred in this application use. In a case of the crystalline aluminosilicate type zeolite, those having higher silica/alumina molar ratio are preferred since they contain hydrophobic pores. Particularly, the zeolite according to this invention is suitable to degassing under the presence of hydrophilic vapors or hydrophilic

liquids. A typical example of the hydrophobic zeolite is silicalite consisting only of the silica ingredient. An example of using the degassing membrane is a hydrogen permeation membrane for degassing dissolved oxygen in water and an aluminum electrolytic capacitor.

The aluminum electrolytic capacitor evolves hydrogen during use but when hydrogen is accumulated, it finally results in explosion due to increase of the inner pressure. The present inventors have found that the zeolite membrane of the invention can form a degassing membrane capable of suppressing the permeation of the electrolyte ingredient and permeating only hydrogen and have accomplished the invention for the electrolytic capacitor mounted with the zeolite membrane of this invention.

An electrolytic capacitor having a feature in mounting the zeolite membrane according to this invention is an electrolytic capacitor having a zeolite membrane with an angle of contact with water of 70° or more and an angle of contact with ethylene glycol of 65° or more. The zeolite membrane is used preferably being mounted to a case or a sealing cap of an electrolytic capacitor and, particularly preferably, being mounted to the sealing cap. The mounting method can include a method of bonding by a sealing epoxy type adhesive, or a method of mounting by using an O-ring or a spring, with no particular restriction only thereto.

An electrolytic capacitor according to this invention is shown in the drawings.

An example that can be practiced is shown in Fig. 2 and Fig. 3. Fig. 2 is a cross sectional view of a usual electrolytic capacitor. An electrolyte is impregnated to a capacitor element formed by winding an anode foil and a cathode foil with craft paper being interposed between them and they are contained in an aluminum container 5 with an anode terminal 3 and a cathode terminal 4 being protruded from through holes of a sealing cap 1. Fig. 3 is an upper plan view showing a state of the sealing cap 1. The permeation membrane of this invention is fixed, for example, by using an adhesive or an O-ring at a position 6 in Fig. 3. Since the zeolite membrane of this invention permeates hydrogen but less permeates water or ethylene glycol, it less permeates steams, water and ethylene glycol as the main ingredient of the steam or the electrolyte and releases hydrogen evolved by electrolysis to the outside without changing the composition of the electrolyte, so that bursting can be avoided and the performance can be stabilized for a long period of time. As the form of the zeolite membrane used in this invention, a flat plate shape is preferably used. There is no particular restriction on the shape and it may suffice that the size is smaller than the size of the sealing cap and, preferably, smaller than the radius of the sealing cap. There is no particular restriction on the thickness so long as it can maintain such a mechanical strength that it is not broken upon setting.

The electrolytic capacitor according to this invention is constituted in the same manner as known electrolytic capacitors except for the hydrogen permeating zeolite membrane described above.

In the electrolytic capacitor of this invention constituted as described above, since a hydrogen gas evolved in the container 5 during use permeates the zeolite membrane 1 and is discharged out of the electrolytic capacitor, the hydrogen gas does not accumulate inside the capacitor to damage or break the container and the electrolyte can be prevented from evaporation as liquid or vapor, so that a long life capacitor can be obtained. A silicone rubber 7 is disposed as a safety valve to the sealing cap 1 in the capacitor.

The eighth invention relates to a method of separating substances by bringing the zeolite membrane into contact with a substance to be separated. The separation method of utilizing the zeolite membrane in this invention is to be explained. Separation by the use of the membrane is to change the compositional ratio of a mixture of gases or liquids containing two or more of ingredients before and after the permeation of the membrane. Since also the zeolite membrane according to this invention can change the compositional ratio before and after permeation, substances can be separated by utilizing the same.

In order to use the zeolite membrane according to this invention as a separation membrane, it is necessary that a substance permeates through the zeolite membrane. The driving force for the permeation is generally a pressure difference or a concentration difference. Any of known methods can be utilized for the method of separation, and a pervaporation method or a reverse osmotic method can be adopted in the case of liquid. In the case of gas, separation can be conducted by providing a pressure difference between the gas supply side and the gas permeation side. Further, also in the case of liquid ingredient and gas ingredient, there is a method of separation by utilizing the gradient of concentration by flowing a sweep gas on the permeation side of the membrane. Usually, modular construction is adopted for increasing the surface area of concentration. For the modulation, known modulation method used usually for the ceramic membrane is applicable.

Further, an alcohol separation method from an aqueous alcohol solution at low concentration using the zeolite membrane in this invention is also preferred. The aqueous alcohol solution at low concentration means an aqueous solution with an alcohol concentration of less than 20%. For example, in a case of fermentation in biomasses by fermentation bacteria to obtain alcohols, since fermentation bacteria die when the alcohol concentration is extremely high in the fermentation step, alcohol is obtained at a concentration less than 20% in the fermentation step. When the zeolite membrane of this invention having high surface water repellency is applied, the alcohol concentration can be increased after permeation.

EXAMPLES

(Example 1)

[Synthesis of Seed Crystals for Synthesizing Silicalite Membrane]

0.28 g of sodium hydroxide (extra pure grade reagent, manufactured by Katayama Chemical Co.) was added to and stirred in a 20 to 25% aqueous solution of 20 g of tetrapropyl ammonium hydroxide (TPAOH) (20 to 25% aqueous solution, manufactured by Tokyo Kasei Co.). Further, 5 g of fumed silica (manufactured by Aldorich Co.) was added and heated at 80°C to obtain a transparent aqueous solution. When it was placed in a polytetrafluoroethylene lined autoclave and heated at 125°C for 8 hours, to obtain a sol in which fine particles of MFI type silicalite (mean particle diameter of about 80 nm) were dispersed.

(Example 2)

[Coating of Zeolite Crystal Particles (1: Lactic Acid)]

An α-alumina porous support of 14 mm square with 3 mm thickness (ceramic membrane (100 mm x 100 mm x 3 mm), manufactured by NGK Insulators. Ltd. cut into this size and: coated only on one surface with fine alumina particles by about 50 μm thickness: mean pore diameter of 0.1 μm) was placed with the alumina-coated surface being upside on a paper towel, to which about 0.4 g of lactic acid (guaranteed grade reagent, manufactured by Katayama Chemical Co.) was dripped. It was left till lactic acid impregnated from the surface of the support to the inside of the support and the droplets disappeared from the surface. Then, water was added to the sol synthesized in Example 1 to form a 0.05 wt% solution. 0.24 g of the sol was dripped on the support impregnated with the lactic acid as uniform as possible and then left as it was. Subsequently, after air drying at a room temperature, it was calcined at 550°C for 3 hours to obtain a support in which the zeolite crystal particles were coated.

When the surface of the thus obtained zeolite crystal layer was observed under a field effect radiation type scanning electron microscope (FE-SEM), the surface of the support was filled with zeolite crystals as shown in Fig. 4 and the support could not be observed from the surface. Further, as a result of measurement by thin membrane X-ray diffractometry (Fig. 5), the ratio for the maximum peak intensity: a(cps) in $2\theta$ = 7.3 to 8.2°, maximum peak intensity : b(cps) in $2\theta$ = 8.5 to 9.1° and maximum peak intensity: c(cps) in $2\theta$ = 13.0 to 14.2° was a/b = 0.66, b/c = 8.5, those were deviated from the values obtained from X-ray diffractometry for powder silicalite (a/b = 2.0, b/c = 7.1) and it can be seen that the crystals were oriented. Fig. 6 is a FE-SEM photograph for the cross section. From the result, it was found that the thickness of the silicalite crystal particle layer was about 0.2 μm from the uppermost surface of the support. Further, it was also found that the silicalite crystal particles intruded also in the inside of the support.

(Example 3)

[Coating of Zeolite Crystal Particles (2: Acetic Acid)]

An α-alumina porous support of 14 mm square with 3 mm thickness (ceramic membrane (100 mm x 100 mm x 3 mm), manufactured by NGK Insulators. Ltd. cut into this size and: coated only on one surface with fine alumina particles by about 50 μm thickness: mean pore diameter of 0.1 μm) was placed with the alumina-coated surface being upside on a paper towel, to which about 0.4 g of acetic acid (guaranteed grade reagent, manufactured by Katayama Chemical Co.) was dripped. It was left till the droplet of acetic acid disappeared from the surface of the support. Then, water was added to the sol synthesized in Example 1 to form a 0.05 wt% solution. 0.24 g of the sol was dripped on the support impregnated with the acetic acid as uniform as possible to apply coating. Subsequently, after air drying at a room temperature, it was calcined at 550°C for 3 hours to obtain a support on which the zeolite crystal particles were coated.

When the surface of the thus obtained zeolite crystal layer was observed under a field effect radiation type scanning electron microscope (FE-SEM), the surface of the support was filled with zeolite crystals and the support could not be observed from the surface. Further, as a result of measurement by thin membrane X-ray diffractometry, the ratio for the maximum peak intensity: a(cps) in $2\theta$ = 7.3 to 8.2°, maximum peak intensity : b(cps) in $2\theta$ = 8.5 to 9.1° and maximum peak intensity: c(cps) in $2\theta$ = 13.0 to 14.2° was a/b = 1.25, b/c = 6.1, those were deviated from the values obtained from X-ray diffractometry for powder silicalite (a/b = 2.0, b/c = 7.1) and it can be seen that the crystals were oriented. From the FE-SEM observation for the cross section, it was found that the thickness of the silicalite crystal particle layer was about 0.2 μm.

(Example 4)

[Coating of Zeolite Crystal Particles (3: Glycolic Acid)]

An α-alumina porous support of 14 mm square with 3 mm thickness (ceramic membrane (100 mm x 100 mm x 3 mm), manufactured by NGK Insulators. Ltd. cut into this size and: coated only on one surface with fine alumina particles by about 50 μm thickness: mean pore diameter of 0.1 μm) was placed with the alumina-coated surface being upside on a paper towel, to which about 0.4 g of an aqueous solution of 70 wt% glycolic acid (manufactured by Wako Junyaku Co.) was dripped. It was left till the droplet of glycolic acid disappeared from the surface of the support. Then, water was added to the sol synthesized in Example 1 to form a 0.08 wt% solution. 0.24 g of the sol was dripped on the support impregnated with the glycolic acid as uniform as possible to apply coating. Subsequently, after air drying at a room temperature, it was calcined at 550°C for 3 hours to obtain a support on which the zeolite crystal particles were coated.

When the surface of the thus obtained zeolite crystal layer was observed under a field effect radiation type scanning electron microscope (FE-SEM), the surface of the support was filled with zeolite crystals and the support could not be observed from the surface. Further, as a result of measurement by thin membrane X-ray diffractometry, the ratio for the maximum peak intensity: a(cps) in 2θ = 7.3 to 8.2°, maximum peak intensity : b(cps) in 2θ = 8.5 to 9.1° and maximum peak intensity: c(cps) in 2θ = 13.0 to 14.2° was a/b = 0.79, b/c = 7.0, those were deviated from the values obtained from X-ray diffractometry for powder silicalite (a/b = 2.0, b/c = 7.1) and it can be seen that the crystals were oriented. From FE-SEM observation for the cross section, it was found that the thickness of the silicalite crystal particle layer was about 0.3 μm.

(Example 5)

[Coating of Zeolite Crystal Particles (4: Lithium Lactate)]

An α-alumina porous support of 14 mm square with 3 mm thickness (ceramic membrane (100 mm x 100 mm x 3 mm), manufactured by NGK Insulators. Ltd. cut into this size and: coated only on one surface with fine alumina particles by about 50 μm thickness: mean pore diameter of 0.1 μm) was placed with the alumina-coated surface being upside on a paper towel, to which about 0.4 g of an aqueous solution of 50 wt% lithium lactate (manufactured by Musashino Chemical Co.) was dripped. It was left till the droplets disappeared from the surface of the support. Then, water was added to the sol synthesized in Example 1 to form a 0.08 wt% solution. 0.24 g of the sol was dripped on the support impregnated with the lithium lactate as uniform as possible to apply coating. Subsequently, after air drying at a room temperature, it was calcined at 550°C for 3 hours to obtain a support on which the zeolite crystal particles were coated.

When the surface of the thus obtained zeolite crystal layer was observed under a field effect radiation type scanning electron microscope (FE-SEM), the surface of the support was filled with zeolite crystals and the support could not be observed from the surface. Further, as a result of measurement by thin membrane X-ray diffractometry, the ratio for the maximum peak intensity: a(cps) in 2θ = 7.3 to 8.2°, maximum peak intensity : b(cps) in 2θ = 8.5 to 9.1° and maximum peak intensity: c(cps) in 2θθ = 13.0 to 14.2° was a/b = 1.00, b/c = 5.2, those were deviated from the values obtained from X-ray diffractometry for powder silicalite (a/b = 2.0, b/c = 7.1) and it can be seen that the crystals were oriented. From FE-SEM observation for the cross section, it was found that the thickness of the silicalite crystal particle layer was about 0.3 μm.

(Example 6)

[Coating of Zeolite Crystal Particles (5: Lactic Acid + Hydrochloric acid)]

An α-alumina porous support of 14 mm square with 3 mm thickness (ceramic membrane (100 mm x 100 mm x 3 mm), manufactured by NGK Insulators. Ltd. cut into this size and: coated only on one surface with fine alumina particles by about 50 μm thickness: mean pore diameter of 0.1 μm) was placed with the alumina-coated surface being upside on a paper towel, to which about 0.4 g of a solution formed by adding a slight amount of hydrochloric acid to lactic acid (guaranteed grade reagent, manufactured by Katayama Chemical Co.)and adjusting to pH 2.0 was dripped. It was left till the droplets of lactic acid disappeared from the surface of the substrate. Then, a 1N aqueous solution of sodium hydroxide was added to the sol synthesized in Example 1 to adjust pH to 12 to form a solution at a crystal concentration of 0.08 wt%. 0.24 g of the sol was dripped on the support impregnated with the lactic acid as uniform as possible to form coating. Subsequently, after air drying at a room temperature, it was calcined at 550°C for 3 hours to obtain a support in which the zeolite crystal particles were coated.

When the surface of the thus obtained zeolite crystal layer was observed under a field effect radiation type scanning electron microscope (FE-SEM), the surface of the support was filled with zeolite crystals and the support could not be observed from the surface. Further, as a result of measurement by thin membrane X-ray diffractometry, the ratio for the maximum peak intensity: a(cps) in 2θ = 7.3 to 8.2°, maximum peak intensity : b(cps) in 2θ = 8.5 to 9.1° and maximum peak intensity: c(cps) in 2θ = 13.0 to 14.2° was a/b = 0.63, b/c = 9.8, those were deviated from the values obtained from X-ray diffractometry for powder silicalite (a/b = 2.0, b/c = 7.1) and it can be seen that the crystals were oriented. From FE-SEM observation for the cross section, it was found that the thickness of the silicalite crystal particle layer was about 0.3μm.

(Example 7)

[Preparation of a silicalite membrane by hydrothermal synthesis method]

About 3 g of a sol having a composition of $4SiO_2$ : TPAOH (tetrapropyl ammonium hydroxide) : $420H_2O$ was placed in an autoclave in a teflon lined autoclave of 5 cc inner volume. Ludox HS-40 (manufactured by DuPont) was used as an $SiO_2$ source. A porous support coated with zeolite crystal particles obtained in Example 2 was immersed in the sol and the autoclave was sealed. The autoclave was placed in an oven at 120°C and heated at 24 hours. After opening the seal of the autoclave, the support was taken out, washed with water, dried and then calcined at the 550°C for 24 hours. In calcining, the temperature elevation rate was 0.6°C/min and the temperature falling rate was 1.2°C/min. As a result of X-ray diffractometry and the electron microscopic observation, it was confirmed that the thin membrane of silicalite was formed on the porous support.

(Example 8)

[Preparation of silicalite membrane by steam method]

A porous support coated with the zeolite crystal particles obtained in Example 2 was immersed with the silicalite particle coated surface on the upside in about 20 g of a sol having a composition of $40SiO_2$ : 12TPAOH (tetrapropyl ammonium hydroxide) : $430H_2O$ for 20 min. Ludox HS-40 (manufactured by DuPont) was used as an $SiO_2$ source. The support was taken out, stood still till the sol deposited excessively on the surface of the support dripped down and further left in a dried air for 24 hours. It was exposed to steams at 150°C for 24 hours. After washing with water and drying, it was calcined at 550°C for 24 hours. In calcining, the temperature elevation rate was 0.6°C/min and the temperature falling rate was 1.2°C/min. As a result of X-ray diffractometry and the electron microscopic observation, it was confirmed that the thin membrane of silicalite was formed on the porous support.

(Example 9)

[Manufacture of permeation measuring cell]

This device is to be explained with reference to Fig. 7. The device is made of stainless steel and supplies a gas from a gas supply port 8. A permeation membrane is fixed by way of a silicon rubber 9 as an elastic member with the surface of the permeation membrane 10 having a zeolite layer being directed on the side of a gas shown at the gas supply port. The surface of the permeation membrane on the side opposite to the surface having the zeolite layer is retained by a stainless steel metal fixture 11 for preventing the gas from leaking through a gap between the silicone rubber 9 and the permeation membrane 10. Further, since the metal fixture is secured by an O-ring 12, the gas after permeating the permeation membrane does not leak at any portion other than a permeation gas exit 13.

(Example 10)

[Measurement for single gas permeation rate using permeation measuring cell]

Using the device shown in Example 9, the permeating rate of hydrogen gas and that of nitrogen gas through the silicalite membrane prepared in Example 8 were measured. The permeation device was placed in an atmosphere at 20°C, the gas supply side and the downstream side of the device were connected with a vacuum pump and pressure was reduced for about 10 min. After stopping the operation of the vacuum pump, hydrogen at 0.2 MPa was supplied to the gas supply side and, when the amount of the hydrogen gas permeating the membrane was measured by a soap-membrane flow meter, it was $4.1 \times 10^{-7}$ (mol/($m^2$s Pa)). Then, the gas supply side and the downstream side of the device were again connected with the vacuum pump and pressure was reduced for about 10 min. After stopping the

operation of the vacuum pump, nitrogen at 0.2 MPa was supplied to the gas supply side and, when the amount of the nitrogen gas permeating the membrane was measured by a soap-membrane flow meter, it was 4.6 x $10^{-7}$ (mol/($m^2$s Pa)). The ratio $\alpha_{H2/N2}$ as the single gas permeation rate between hydrogen and nitrogen was 0.89.

(Comparative Example 1)

[Coating of zeolite crystal particles (6: only seed crystal sol at low concentration]

An α-alumina porous support of 14 mm square with 3 mm thickness (ceramic membrane (100 mm x 100 mm x 3 mm) manufactured by NGK Insulators. Ltd. cut into this size and: coated only on one surface with fine alumina particles by about 50 μm thickness, with a mean pore diameter of 0.1 μm) was placed with the alumina-coated surface being upside on a paper towel. Then, water was added to the sol synthesized in Example 1 to form a 0.05 wt% solution. 0.24 g of the sol was dripped on the support to apply coating as uniform as possible and then left as it was. Subsequently, after air drying at a room temperature, it was calcined at 550°C for 3 hours to obtain a support on which the zeolite crystal particles were coated.

When the cross section of the thus obtained zeolite crystal layer was observed by an electron microscope, no layer made of zeolite crystal particles was found. Further, as a result of measurement by thin membrane X-ray diffractometry, peaks attributable to silicalite were not observed.

(Comparative Example 2)

[Coating of Zeolite Crystal Particles (7: only seed crystal sol at high concentration)]

An α-alumina porous support of 14 mm square with 3 mm thickness (ceramic membrane (100 mm x 100 mm x 3 mm) manufactured by NGK Insulators. Ltd. cut into this size and: coated only on one surface with fine alumina particles by about 50 μm thickness, with a mean pore diameter of 0.1 μm) was placed with the alumina-coated surface being upside on a paper towel. Then, water was added to the sol synthesized in Example 1 to form a 2.0 wt% solution. 0.24 g of the sol was dripped on the support as uniform as possible and then left as it was. Subsequently, after air drying at a room temperature, it was calcined at 550°C for 3 hours to obtain a support on which the zeolite crystal particles were coated.

When the surface of the thus obtained zeolite crystal layer was observed under a field effect radiation type scanning electron microscope (FE-SEM), the surface of the support was filled with zeolite crystals and the support could not be observed from the surface as shown in Fig. 8 but cracks were also observed. Further, as a result of measurement by thin membrane X-ray diffractometry (Fig. 9), the ratio for the maximum peak intensity: a(cps) in 2θ = 7.3 to 8.2°, maximum peak intensity : b(cps) in 2θ = 8.5 to 9.1° and maximum peak intensity: c(cps) in 2θ = 13.0 to 14.2° was a/b = 2.0, b/c = 8.5 those showed substantially the same values as those obtained from X-ray diffractometry for powder silicalite. Fig. 10 shows FE-SEM photograph for cross section. It was found from the result that the thickness of the silicalite crystal particle layer was about 3 μm from the uppermost surface of the support. It was further found that the silicalite crystal particles intruded also in the support.

(Example 11)

[Water Repellency of not Treated Silicalite Membrane]

After vacuum drying the silicalite membrane prepared in each of Examples 1, 2 and 8 with the shape of the support used being 9.6 mm in diameter at 120°C for 2 hours, it was allowed to cool to a room temperature and placed on a plate which was vertical to the direction of a gravitational force with the zeolite surface being upwarded. Water was dripped by one drop to the treated surface and, when the angle of contact between the surface of the permeation membrane and the droplet was measured 30 sec after dripping by using an optical mirror type CA-D model (manufactured by Kyowa Kaimen Kagaku Co.), it was as shown in Table 1. Then, after vacuum drying the membrane again at 120°C for 2 hours, it was allowed to cool to a room temperature and placed on a plate which was vertical to the direction of a gravitational force with the zeolite surface being upwarded. Ethylene glycol was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1.

(Example 12)

[Treatment by Isobutyl Triethoxy Silane]

The silicalite membrane 10 prepared in each of Examples 1, 2 and 8 with the shape of the support used being 9.6 mm in diameter was placed in a cell shown in Fig. 11. A cell 17 comprises a reducing union 14 made of SUS and a reducer 15 made of SUS and has a structure of sandwiching the silicalite membrane 10 between O-rings 16. Then, the filtration device is explained with reference to Fig. 12. The cell 17 shown in Fig. 11 was fixed in an oven 18. Hydrogen gas at 0.2 MPa was taken out by way of a pressure reduction valve 20 from a hydrogen reservoir 19 and bubbled in a test tube 21 containing a coupling agent. Gas mixture of hydrogen/coupling agent was introduced into the cell 17 and the flow rate of the permeating gas was measured by a soap-membrane flow meter 22 to determine a hydrogen permeation rate. In this example, 30 ml of isobutyl triethoxy silane was placed in the test tube and the temperature of the oven was set to be 150°C. The hydrogen permeation rate was 1.40 x $10^{-7}$ (mol($m^2$ s Pa)) initially. When the hydrogen permeation rate was settled to 0.111 x $10^{-7}$ (mol($m^2$ s Pa)) after one hour, it was cooled and the membrane was taken out and then exposed to water at normal temperature for 3 min.

Further, after vacuum drying the membrane at 120°C for 2 hours, it was placed on a plate which was vertical to the direction of a gravitational force with the treated surface being upwarded. Water was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1. Then, after vacuum drying the membrane again at 120°C for 2 hours, it was allowed to cool to a room temperature and placed on a plate which was vertical to the direction of a gravitational force with the treated surface being upwarded. Ethylene glycol was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1.

(Example 13)

[Treatment by n-Hexylsilane]

The silicalite membrane prepared in each of Examples 1, 2 and 8 with the shape of the support used being 9.6 mm in diameter was placed in the cell 17 shown in Fig. 11 and incorporated in the device shown in Fig. 12. 30 ml of n-hexylsilane was charged in the test tube and the temperature of the oven was set to be 60°C. Hydrogen was supplied from the hydrogen reservoir and the pressure was controlled to be 0.2 MPa. The opposite side was connected with the soap-membrane flow meter and the pressure was atmospheric(about 0.1 MPa). The flow rate of the permeating gas was measured by the soap-membrane flow meter to determine a hydrogen permeation rate. The hydrogen permeation rate was initially 2.53 x $10^{-7}$ (mol/($m^2$ s Pa)) and, when the hydrogen permeation rate was reduced to 0.143 x $10^{-7}$ (mol/($m^2$ s Pa)) after 3 hours, the membrane was cooled and taken out and then left in atmospheric air for 12 hours.

Further, after vacuum drying the membrane at 120°C for 2 hours, it was placed on a plate which was vertical to the direction of a gravitational force with the treated surface being upwarded. Water was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1. Then, after vacuum drying the membrane again at 120°C for 2 hours, it was allowed to cool to a room temperature and placed on a plate placed which was vertical to the direction of a gravitational force with the treated surface being upwarded. Ethylene glycol was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1.

(Example 14)

[Treatment by $n-C_8F_{17}C_2H_4Si(OEt)_3$]

The silicalite membrane prepared in each of Examples 1, 2 and 8 with the shape of the support used being 9.6 mm in diameter was placed in the cell 17 shown in Fig. 11 and incorporated in the device shown in Fig. 13. About 0.22 ml of a silan coupling agent 23 ($n-C_8F_{17}C_2H_4Si(OEt)_3$) was dripped to the surface of the membrane and the membrane surface was immersed in the processing agent. Suction was conducted by a vacuum pump 24 from the

surface on the side opposite to the membrane and the permeating silane coupling agent 23 was trapped by a test tube 25. While sucking at a room temperature for one hour, the processing agent was kept to remain in the state of liquid on the membrane surface,and after sucking, the processing agent remaining on the membrane surface was drawn out by a pipette. The membrane was taken out of the cell. The surface of the membrane taken out was cleaned with purified water for 3 min. It was further heated at 100°C for one hour.

After vacuum drying the membrane at 120°C for 2 hours, it was placed on a plate which was vertical to the direction of a gravitational force with the treated surface being upwarded. Water was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1. Then, after vacuum drying the membrane again at 120°C for 2 hours, it was placed on a plate placed which was vertical to the direction of a gravitational force with the treated surface being upwarded. Ethylene glycol was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1.

Further, as a result of ESCA measurement of the membrane, the fluorine concentration on the surface of the zeolite membrane was 1 x $10^{-3}$ mol/$m^2$.

(Example 15)

[Treatment by $Si(OMe)_4$]

The silicalite membrane prepared in each of Examples 1, 2 and 8 with the shape of the support used being 9.6 mm in diameter was placed in the cell 17 shown in Fig. 11 and incorporated in the device shown in Fig. 14. The cell 17 was fixed in an oven 26 and connected with a test tube 21 in an oven 27. About 30 ml of purified water was charged in the test tube 27 and the temperature of the oven 27 was kept at 30°C . Further, the temperature of the oven 26 was elevated to 100°C. Nitrogen gas at 0.2 MPa was taken out by way of a pressure reduction valve 20 from a nitrogen reservoir 28 and supplied to the test tube 21. After 1 hour, nitrogen was stopped and the test tube 21 charged with water was rapidly detached. Further, a test tube 29 charged with about 30 ml of tetramethoxysilane was attached and temperature of the oven 27 was kept at 30°C. The temperature of the oven 26 was kept at 100°C and a nitrogen gas at 0.2 MPa was taken out by way of a pressure reduction valve from the nitrogen reservoir 28 and supplied to the test tube 29. The nitrogen permeation rate was initially at 3.45 x $10^{-7}$ (mol/($m^2$ s Pa)). Since the nitrogen permeation rate was reduced to 0.651 x $10^{-7}$ (mol/($m^2$ s Pa)) after 1 hour, the membrane was cooled, taken out and calcined at 550°C for 2 hours.

Further, after vacuum drying the membrane at 120°C for 2 hours, it was placed on a plate which was vertical to the direction of a gravitational force with the treated surface being upwarded. Water was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1. Then, after vacuum drying the membrane again at 120°C for 2 hours, it was allowed to cool to a room temperature and placed on a plate placed which was vertical to the direction of a gravitational force with the treated surface being upwarded. Ethylene glycol was dripped by one drop to the treated surface and, when angle of contact between the surface of the permeation membrane and the droplet was measured 30 sec after the dripping by using an optical mirror type CA-D model (manufactured by Kyowa Kaimen Kagaku Co.), it was as shown in Table 1.

(Example 16)

[Treatment by n-$CF_3CH_2CH_2SiMe_2Cl$]

The silicalite membrane prepared in each of Examples 1, 2 and 8 with the shape of the support used being 9.6 mm in diameter was vacuum dried at 120°C for 2 hours. Then, a solution was prepared by adding n-$CF_3CH_2CH_2SiMe_2Cl$ to thoroughly dewatered diethyl ether, so as to be 10% by weight, in which the membrane was immersed and left for 30 min while sealing the container as it was. Then, the membrane was taken out of the solution and washed several times with thoroughly dewatered diethyl ether. It was vacuum dried at 120°C for 2 hours.

Further, after vacuum drying the membrane at 120°C for 2 hours, it was placed on a plate which was vertical to the direction of a gravitational force with the treated surface being upwarded. Water was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1. Then, after vacuum drying the membrane again at 120°C for 2 hours, it was

allowed to cool to a room temperature and placed on a plate placed which was vertical to the direction of a gravitational force with the treated surface being upwarded. Ethylene glycol was dripped by one drop to the treated surface and, when the angle of contact between the surface of the permeation membrane and the droplet was measured 30 sec after the dripping by using an optical mirror type CA-D model (manufactured by Kyowa Kaimen Kagaku Co.), it was as shown in Table 1.

Further, as a result of ESCA measurement of the membrane, the fluorine concentration on the surface of the zeolite membrane was 1 x $10^{-3}$ mol/$m^2$.

Table 1

| | Angle of contact with water ( ° ) | Angle of contact with ethylene glycol( ° ) |
|---|---|---|
| Example 11 | 68 | 38 |
| Example 12 | 75 | 67 |
| Example 13 | 90 | 74 |
| Example 14 | 116 | 126 |
| Example 15 | 85 | 72 |
| Example 16 | 105 | 98 |

(Example 17)

[Measurement of hydrogen permeation rate]

The membrane prepared in each of Examples 12 to 16 was incorporated into a permeation cell 17 shown in Fig. 11, which was incorporated in the device shown in Fig. 15. Hydrogen gas at 0.2 MPa was taken out by way of the pressure reduction valve 20 from the hydrogen reservoir 19 and supplied to the cell. The permeation side was connected with the soap-membrane flow meter 22 to measure the hydrogen permeation rate. The result is shown in Table 2.

Table 2

| | Hydrogen permeation rate (x $10^{-7}$ mol/$m^2$ s Pa) |
|---|---|
| Example 17(12) | 0.55 |
| Example 17(13) | 0.40 |
| Example 17(14) | 0.83 |
| Example 17(15) | 0.98 |
| Example 17(16) | 1.20 |

(Comparative Example 3)

[Hydrogen permeation rate of not treated membrane in ethylene glycol atmosphere]

The silicalite membrane prepared in each of Examples 1, 2 and 8 with the shape of the support used being 9.6 mm in diameter and having a hydrogen permeation rate of 3.0 x $10^{-7}$ (mol/($m^2$ s Pa)) was placed in the cell 17 of Fig. 11 and incorporated into the device shown in Fig. 12. 30 ml of ethylene glycol was charged in the test tube 21 and the temperature of the oven 18 was set to be 105°C. The pressure of the hydrogen reservoir 19 was set to 0.2 MPa and the permeation side was connected with the soap-membrane flow meter 22 to measure the hydrogen permeation rate. 23 hours after starting the measurement, the hydrogen permeation rate was reduced to 0.330 x $10^{-7}$ (mol/($m^2$ s Pa)). The reduction rate of the permeation rate was 89% (Table 3).

(Example 18)

[Ethylene glycol permeation experiment]

The treated zeolite membrane obtained in each of Examples 12 to 16 was placed in the cell 17 of Fig. 11 and incorporated in the device of Fig. 12. 30 ml of ethylene glycol was charged in the test tube and the entire device was

heated to be 105°C. Hydrogen was supplied from the hydrogen reservoir 19, the reservoir pressure was set to be 0.2 MPa and the permeation side was connected with the soap-membrane flow meter 22 to measure the hydrogen permeation rate. The reduction rate of the hydrogen permeation rate after lapse of 23 hours from the starting of measurement and the hydrogen permeation rate under the presence of ethylene glycol vapors were as shown in Table 3.

Table 3

| | Hydrogen permeation rate after 23 hours (x $10^{-7}$ mol/$m^2$ s Pa) | Reduction ratio of hydrogen permeation ratio (%) |
|---|---|---|
| Comp. Example 3 | 0.33 | 89 |
| Example 18(12) | 0.35 | 37 |
| Example 18(13) | 0.33 | 35 |
| Example 18(14) | 0.64 | 22 |
| Example 18(15) | 0.26 | 40 |
| Example 18(16) | 1.02 | 15 |

(Comparative Example 4)

[Application of not treated membrane to electrolytic capacitor]

The silicalite membrane prepared in each of Examples 1, 2 and 8 with the shape of the support used being 9.6 mm in diameter was placed in the cell 17 of Fig. 11 and incorporated into a device shown in Fig. 16 and ethylene glycol was charged into a test tube 30. The device was placed in the oven at 85°C. Thirty hours after, the weight was reduced by 9.39 x $10^{-3}$ g. When the surface of the membrane was observed upon completion of the experiment, dewing due to ethylene glycol was observed. For applying the membrane to a large sized aluminum electrolytic capacitor, it was fixed to a sealing cap 1 as shown in Fig. 3. As shown in Fig. 17, a spring 32 is engaged to the permeation membrane 10 on the surface not attached with zeolite 31, which was sandwiched and secured between an upper portion 33 and a lower portion 34 of the sealing cap. An O-ring 12 was put between the lower portion 34 of the sealing cap and the permeation membrane 10. A large-scaled screw terminal type electrolytic capacitor was prepared by using the sealing cap. The electrolytic capacitor was placed in an oven at 85°C and a rated voltage at 470 V was applied across the electrodes. After use for 1000 hours, when the state of the silicone rubber 7 was confirmed visually, the silicone rubber 7 was somewhat bulged. Further, when the membrane 10 was taken out of the capacitor, the electrolyte was deposited on the surface. Further, when the hydrogen permeation rate was measured, hydrogen did not permeate through membrane at all.

(Example 19)

[Application of the membrane of Example 14 to electrolytic capacitor]

The treated zeolite membrane obtained in Example 14 was placed in the cell 17 shown in Fig. 11, incorporated in the device shown in Fig. 16 and ethylene glycol was charged in the test tube 30. The device was placed in an oven at 85°C. After 30 hours, the weight was reduced by 1.33 x $10^{-3}$ g. After the completion of the experiment, when the surface of the membrane was observed, liquid droplet of ethylene glycol was not found and dewing was not observed. For applying the membrane to a large-scaled aluminum electrolytic capacitor, it was secured to the sealing cap 1 as shown in Fig. 3. As shown in Fig. 17, a spring 32 is engaged to the permeation membrane 10 on the surface not attached with zeolite 31, which was sandwiched and secured between the upper portion 33 and the lower portion 34 of the sealing cap. A large-scaled screw terminal type electrolytic capacitor was prepared by using the sealing cap. The electrolytic capacitor was placed in an oven at 85°C and a rated voltage at 470 V was applied across the electrodes. After use for 1000 hours, when the state of the silicone rubber 7 was confirmed visually, the silicone rubber 7 was not bulged at all. Further, when the membrane 10 was taken out of the capacitor, no electrolyte deposition on the surface was observed. Further, when the hydrogen permeation rate of the membrane after use was measured, it was 0.52 x $10^{-7}$ (mol/($m^2$ s Pa)).

(Example 20)

[Hydrogen/water permeation example in the membrane of Example 8]

The silicalite membrane prepared in each of Examples 1, 2 and 8 with the shape of the support used being 9.6 mm in diameter was placed in a cell 35 shown in Fig. 18. The cell comprises three reducing unions 14 made of SUS and a T-tube 36 made of SUS in which an SUS tube 37 was introduced into the SUS T-tube and bonded with the SUS reducing union 14 at the right end of the drawing. Further, the permeation membrane 10 is fixed by way of O-rings 12 between the SUS reducing union 14 at the left end in the drawing and the SUS T-tube. The cell 35 was incorporated in the device shown in Fig. 19. About 30 ml of purified water was charged in a test tube 21 and the temperature of an oven 37 was kept at 40°C. The steam pressure was 6.5 kPa. Then, the temperature of the oven 38 was elevated to 120°C and a hydrogen gas 39 at 0.2 MPa was supplied. A vent 40 was opened to adjust such that the flow rate of the gas flowing to the vent and the flow rate of the gas permeating the membrane was about 20/1. The hydrogen/steam ratio of the gas permeating the membrane was measured by gas chromatography at 41. When the permeation selectivity $\alpha$ for hydrogen/steams was determined based on the result of measurement according to equation 1, the selectivity $\alpha$ was 4.5.

$$\alpha = (S'(\text{hydrogen})/S'(\text{water}))/(S(\text{hydrogen})/S(\text{water})) \qquad (1)$$

where
S(hydrogen), S(water): GC analysis area of hydrogen or water in a gas mixture before permeation of membrane,
S'(hydrogen), S'(water): GC analysis area of hydrogen or water in a gas mixture after permeation of membrane.

(Example 21)

[Experiment for ethanol/water content separation in membrane of Example 8]

The silicalite membrane prepared in each of Examples 1, 2 and 8 with the shaped of the support used being 9.6 mm in diameter was placed in a cell 35 shown in Fig. 18 and incorporated into a device shown in Fig. 20. A liquid mixture 42 of ethanol/water (weight ratio 10:90) was brought into contact with the membrane surface and evacuated by a vacuum pump from the side opposite to the membrane. A trap 43 at a liquid nitrogen temperature disposed between the membrane and the vacuum pump and all of the permeated ingredients were collected. When the permeation selectivity $\alpha$ for ethanol/water was determined according to formula 2 based on the result of measurement for the compositional ratio of the permeation ingredient by gas chromatography, the selectivity $\alpha$ was 150.

$$\alpha = (S'(\text{ethanol})/S'(\text{water}))/(S(\text{ethanol})/S(\text{water})) \qquad (2)$$

in which
S(ethanol), S(water): GC analysis area of ethanol or water in the liquid mixture before membrane permeation,
S'(ethanol), S'(water): GC analysis area of ethanol or water in the liquid mixture after membrane permeation.

(Example 22)

[Separation method]

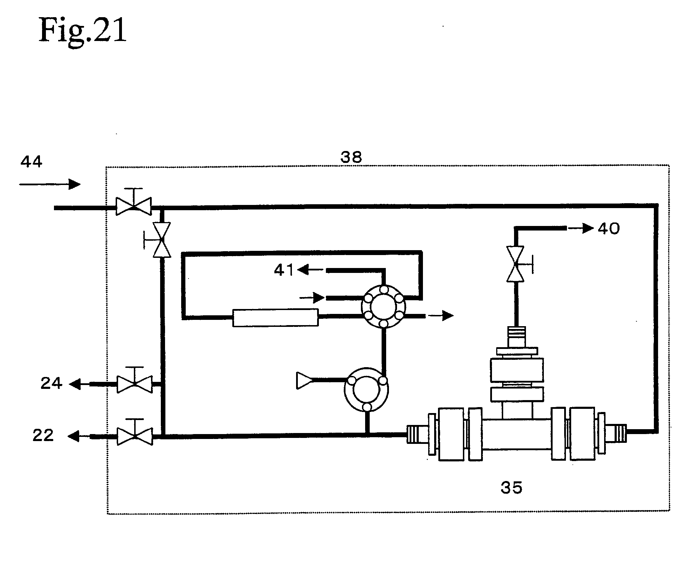

A device used in this example is to be explained with reference to Fig. 21. The permeation selectivity of the silicalite membrane prepared in Example 8 for nitrogen/neopentane 44 (volumic ratio 99:1) was measured using the apparatus. The permeation cell was placed in an atmosphere at 20°C and the gas supply side and the downstream side of permeation of the cell were connected with a vacuum pump 24 and the pressure was reduced for about 10 min. After stopping the operation of the vacuum pump, a gas mixture 44 of nitrogen/neopentane was supplied to the downstream side of permeation. Then, the pressure on the gas supply side was increased to 2 atm and the gas permeating the membrane was sent to gas chromatography 41 to analyze the gas compositional ratio. As a result, the volumic ratio between nitrogen and neopentan was 99.947 : 0.063 and the selectivity (nitrogen/neopentane) was about 16.

## Claims

1. A method of coating zeolite crystals which comprises depositing, impregnating or coating a liquid that contains a compound capable of satisfying at least one of the following compounds (1) to (3) to a substrate and then bringing the same into contact with a slurry, sol or solution that contains zeolite crystals:

   (1) an acid,
   (2) an ester forming carboxylate anion by dissociation, and
   (3) a metal carboxylate salt that forms carboxylate anion by dissociation.

2. A method of coating zeolite crystals in which the compound capable of satisfying at least one of (1) to (3) in claim 1 is one or more of compounds selected from lactic acid, lactate ester, metal lactate salt, glycolic acid, glycolate ester and metal glycolate salt.

3. A method of coating zeolite crystals in which the following relations (α) and (β) are established between pH of the liquid deposited, impregnated or coated to the substrate ($pH_1$) and pH of the slurry, sol or solution that contains zeolite crystals ($pH_2$) in claim 1:

   (α) $11 < (pH_1) + (pH_2) < 17$
   (β) when $pH_1 < 7$, $pH_2 > 7$ and when $pH_1 > 7$, $pH_2 < 7$.

4. A substrate containing a layer made of zeolite crystal particles with a thickness of 0.5 μm or less, in which at least one surface of the substrate is covered with the layer made of zeolite crystal particles and the zeolite crystal particles are oriented.

5. A substrate containing the layer made of zeolite crystal particles as defined in claim 4, wherein the substrate is porous.

6. A substrate containing MFI type zeolite crystals that satisfies the following relations (A) and (B) when X-ray diffraction is measured for a zeolite-coated surface, using CuKα as a X-ray source (wavelength: 0.154 nm), fixing an angle of incidence to 3°, at a scanning rate of 2θ 4°/min in a parallel optical system,

   (A) a/b = 0.3 to 1.5
   (B) b/c > 4.4

   in which

   a represents a peak intensity for a maximum peak in 2θ = 7.3 to 8.2,
   b represents a peak intensity for a maximum peak in 2θ = 8.5 to 9.1, and
   c represents a peak intensity for a maximum peak in 2θ = 13.0 to 14.2.

7. A method of manufacturing a zeolite membrane which comprises:

   (a) a step of coating zeolite crystals by the method as defined in any one of claims 1 to 3,
   (b) a step of bringing the coated zeolite crystals into contact with a zeolite precursor and
   (c) a step of subsequently crystallizing the zeolite precursor.

8. A method of manufacturing a zeolite membrane as defined in claim 7, wherein the type of zeolite is MFI.

9. A method of processing a zeolite membrane which comprises bringing the zeolite membrane with a processing agent having active groups reactive with OH groups and forming inorganic oxides after calcining, as well as water and/or steam.

10. A method of processing a zeolite membrane as defined in claim 9, wherein one surface of the zeolite membrane is brought into contact with the processing agent and a pressure on the other surface of the zeolite membrane is made lower than that on the surface in contact with the processing agent.

11. A method of processing a zeolite membrane as defined in claim 9 or 10, wherein the processing agent is represented by (I) or (II):

(I) $R_x\text{-M1-}X_{4-x}$

(II) $R_y\text{-M2-}X_{3-y}$

(where R represents an alkyl group or aryl group, X represents an active group reactive with OH group, x is 0, 1, 2 or 3 and y represents 0, 1 or 2, M1 represents any one of titanium, silicon, germanium and M2 represents boron or aluminum).

**12.** A method of processing a zeolite membrane as defined in claim 9 or 10, wherein the processing agent is represented by (III) or (IV):

(III)

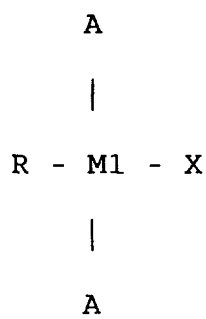

(IV)

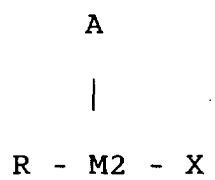

(where R represents an alkyl group or aryl group, in which a hydrogen atoms are partially or entirely substituted by fluorine, A represents an alkyl group, aryl group, methoxy group, ethoxy group or chlorine and X represents an ethoxy group, methoxy group, hydroxyl group or chlorine, M1 represents any one of titanium, silicon and germanium and M2 represents boron or aluminum).

**13.** A method of processing a zeolite membrane as defined in claim 11 or 12, wherein R in the processing agent (I) to (IV) has a structure represented by (V):

(V) $CF_3(CF_2)_n(CH_2)_m\text{-}$

where n is an integer from 0 to 7, and m is an integer from 0 to 3).

**14.** A method of processing a zeolite membrane which comprises bringing a zeolite membrane and a processing agent having functional groups capable of reacting with silanol groups of zeolite into contact with each other under the absence of water and then applying a heat treatment and/or pressure reducing treatment.

**15.** A method of processing a zeolite membrane as defined in claim 14, which uses a processing agent having, in the molecule, only one functional group capable of reacting with silanol groups of zeolite.

**16.** A zeolite membrane obtained by the method as defined in any one of claims 7 to 15, wherein the permeation rate of pure nitrogen is greater than the permeation rate of pure hydrogen.

**17.** A zeolite membrane obtained by the method as defined in any one of claims 7 to 15, wherein the angle of contact with water is 70° or more and an angle of contact with ethylene glycol is 65° or more.

**18.** A zeolite membrane obtained by the method as defined in any one of claims 7 to 15, wherein the concentration of fluorine atoms on the surface of the zeolite membrane is 5 x $10^{-7}$ mol/$m^2$ or more.

**19.** An aluminum electrolytic capacitor in which a zeolite membrane obtained by the method as defined in any one of claims 7 to 15 is attached.

**20.** A degassing membrane disposed with a zeolite membrane obtained by a method as described in any one of claims 7 to 15.

**21.** A method of separating substances in which a zeolite membrane obtained by the method as defined in any one of claims 7 to 15 is brought into contact with a substance as a target for separation.

**22.** A method of separating alcohol from an aqueous solution of alcohol at low concentration by using a zeolite membrane obtained by the method as defined in any one of claims 7 to 15.

Fig.1

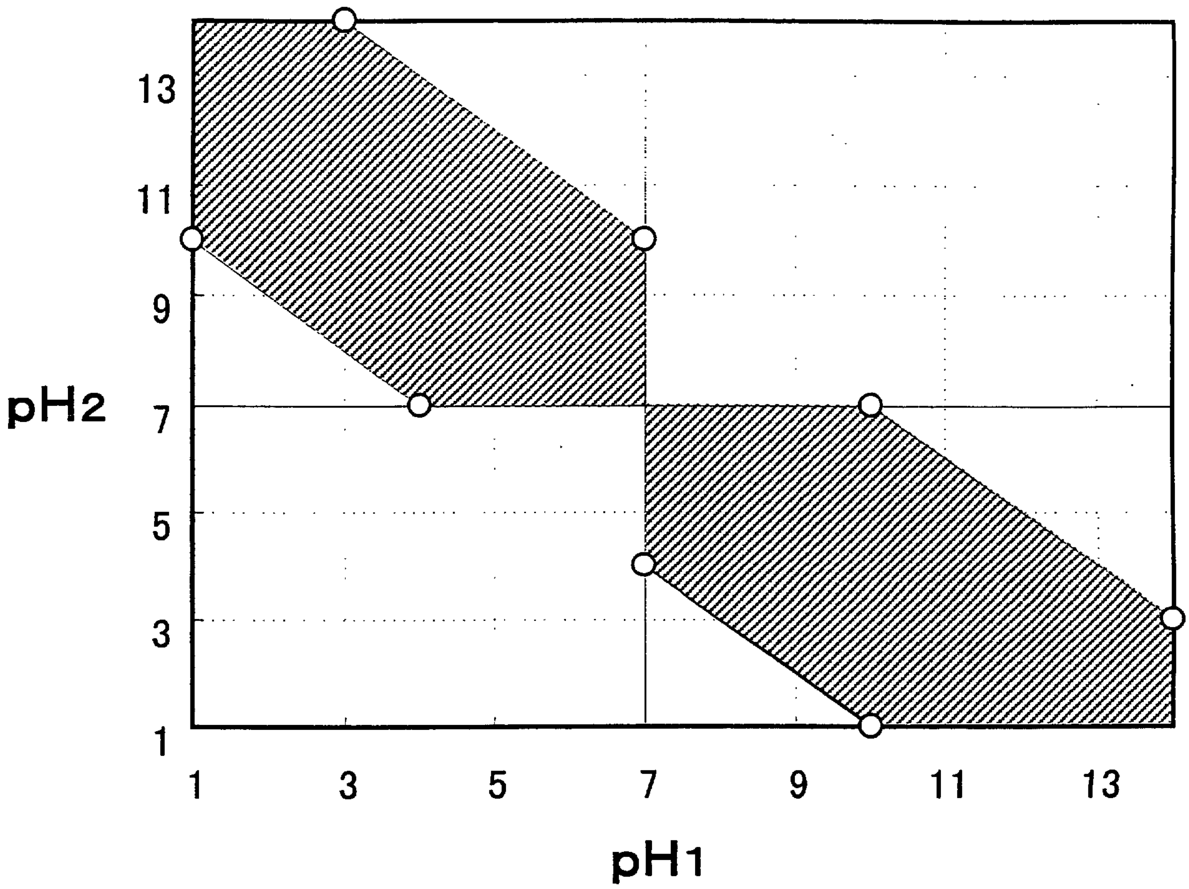

Fig.2

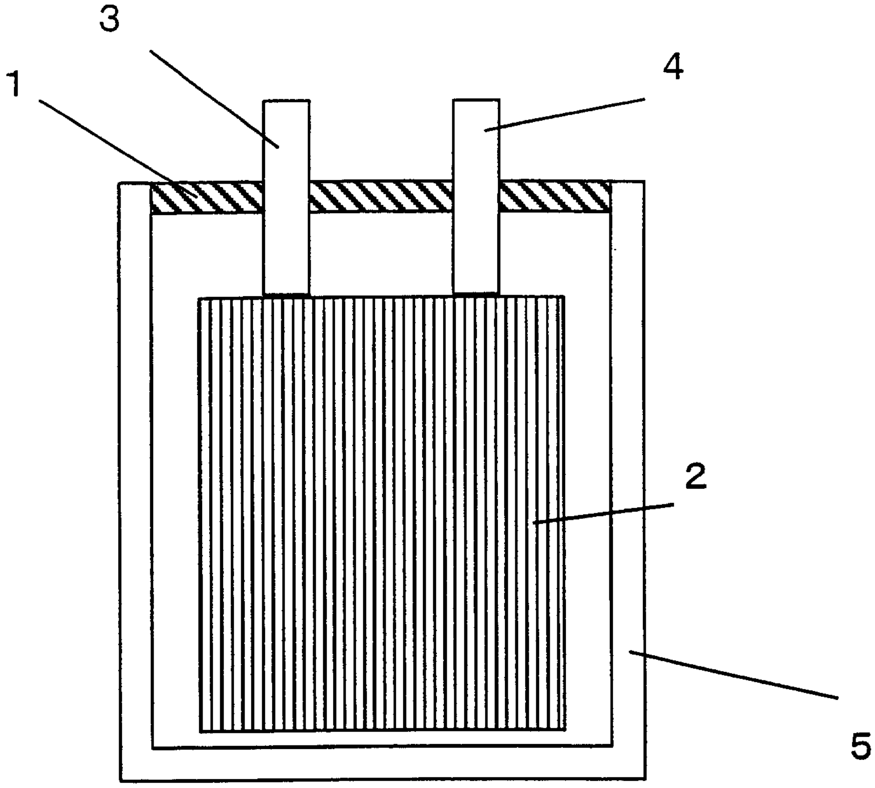


Fig.3

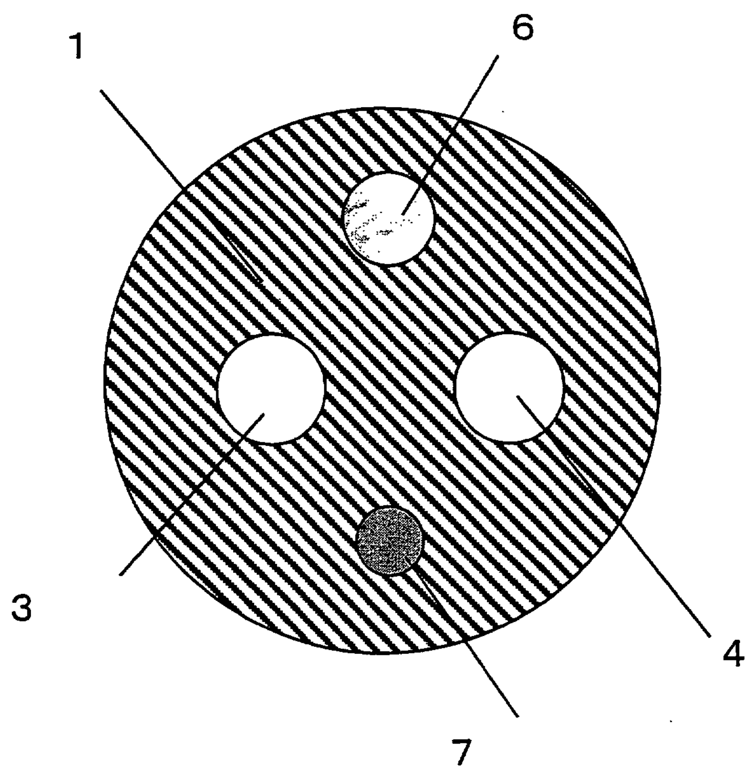

Fig.4

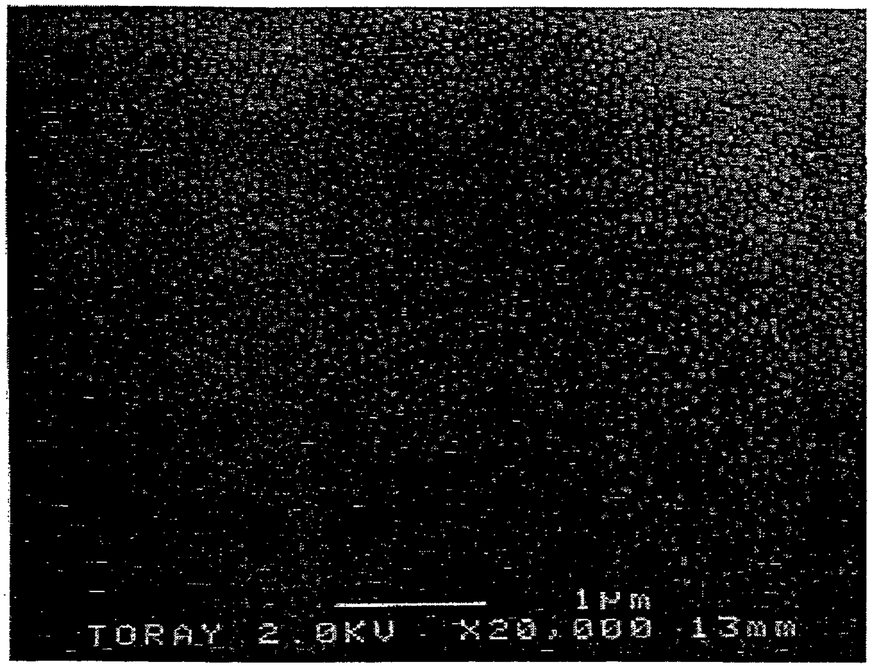


Fig.6

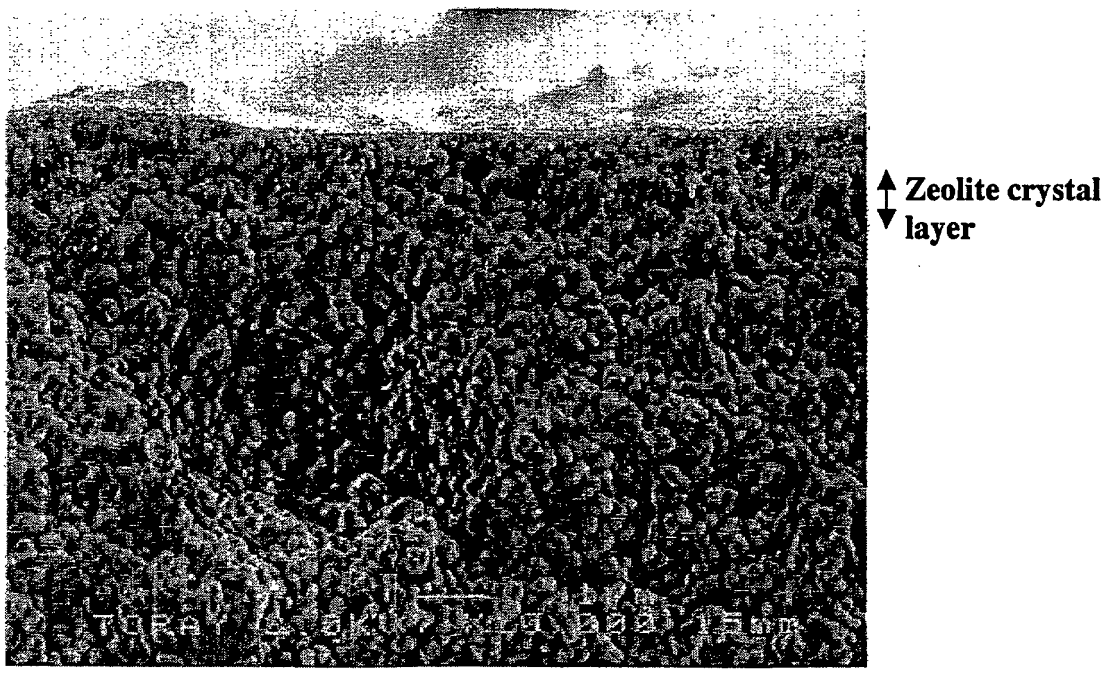

Fig.7

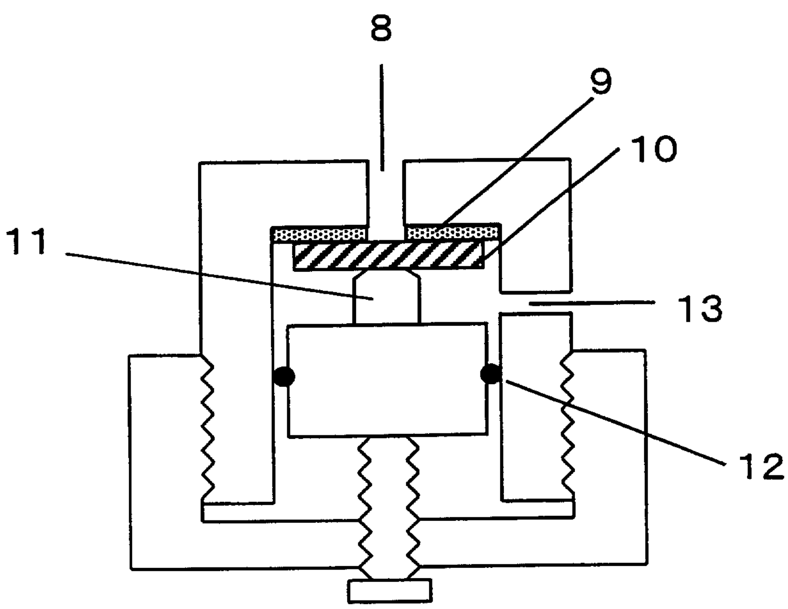

Fig.8

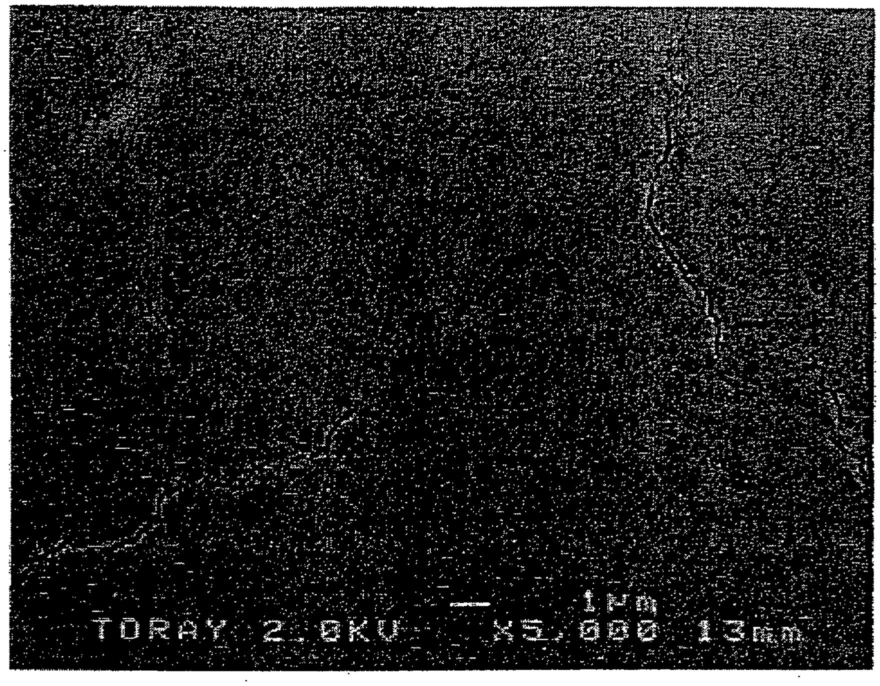


Fig.10

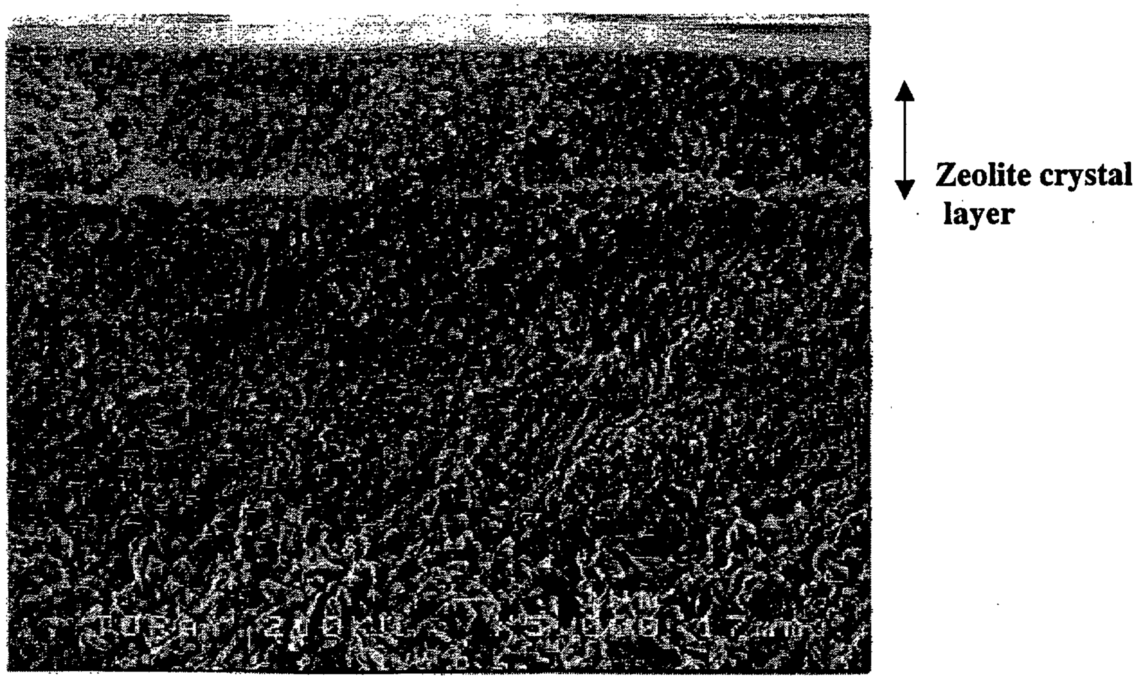

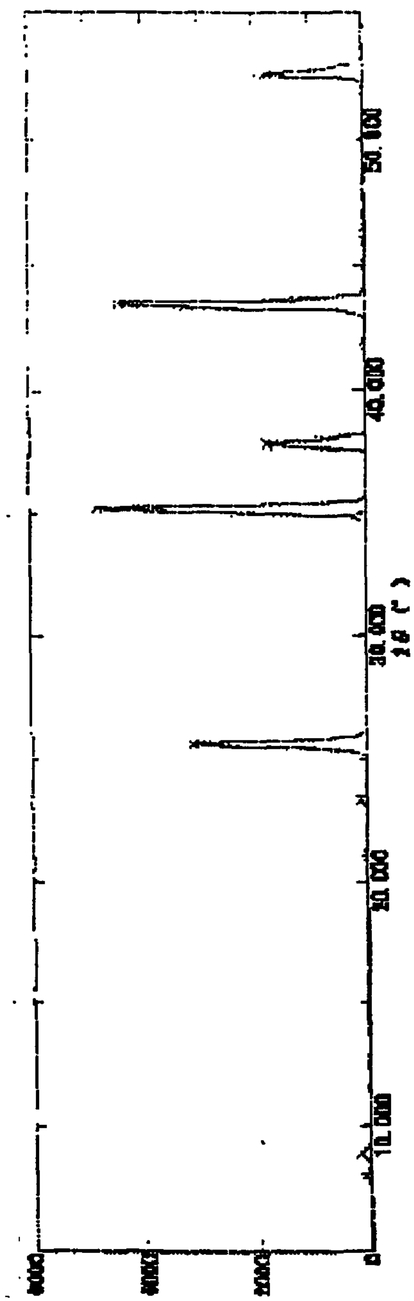


Intensity

Fig.5

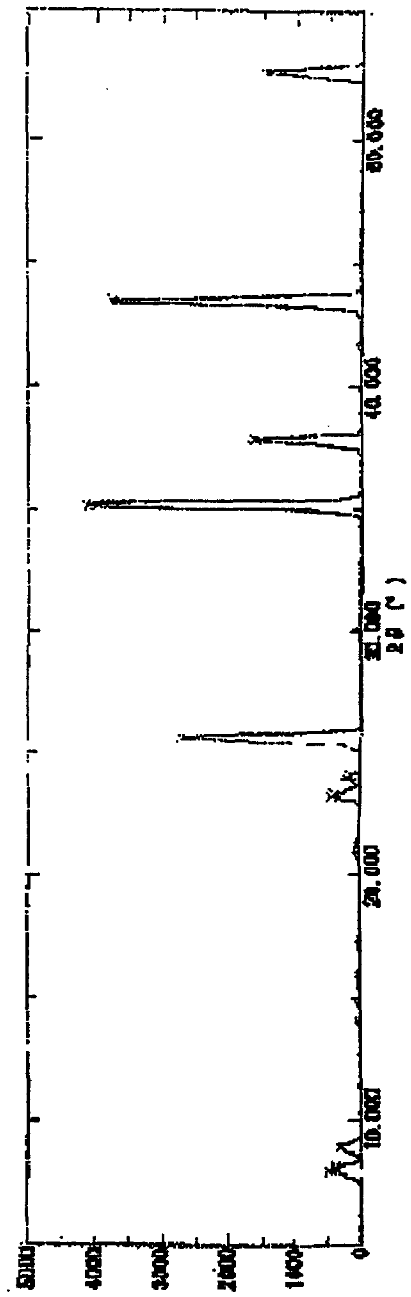


Intensity

Fig.9

Fig.11

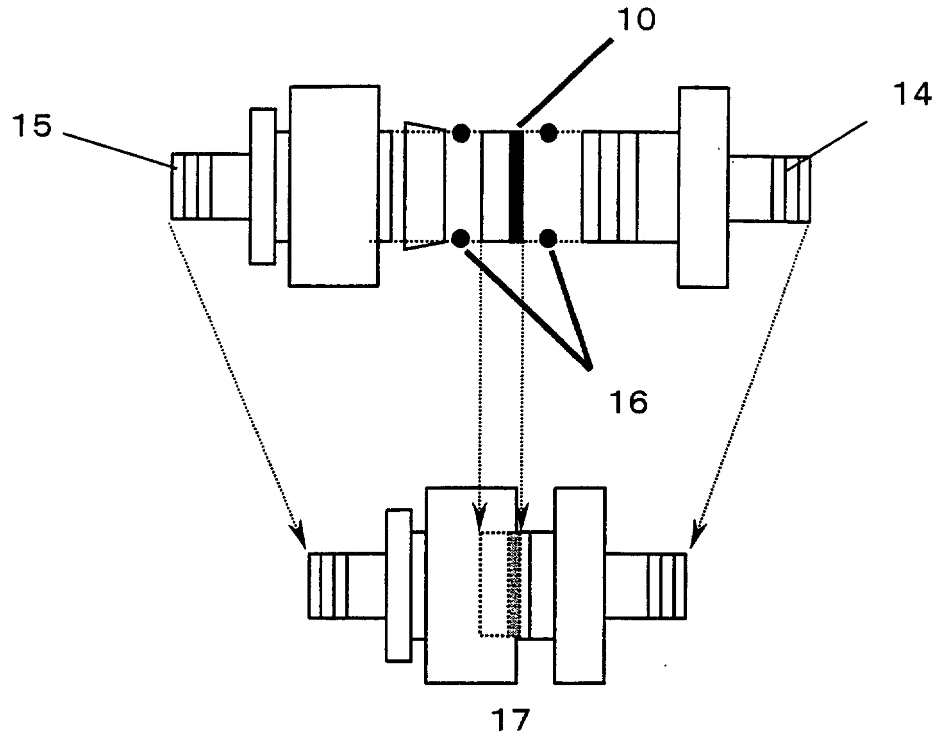


Fig.12

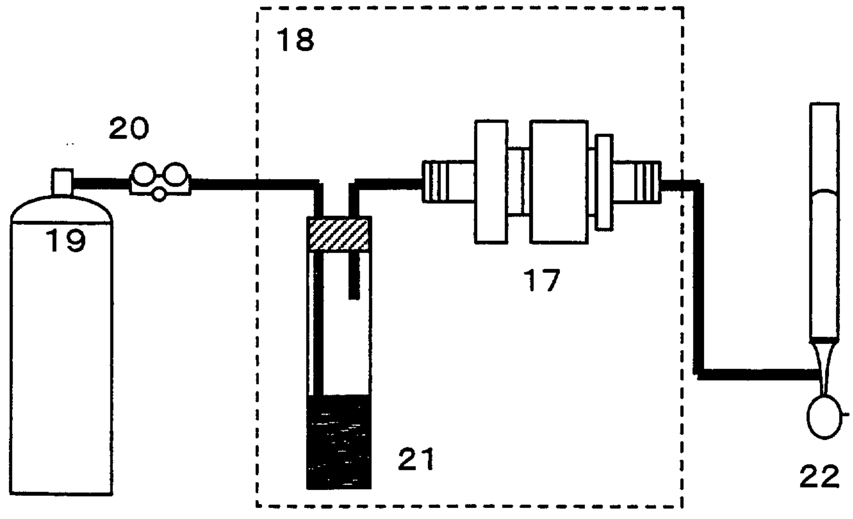

Fig.13

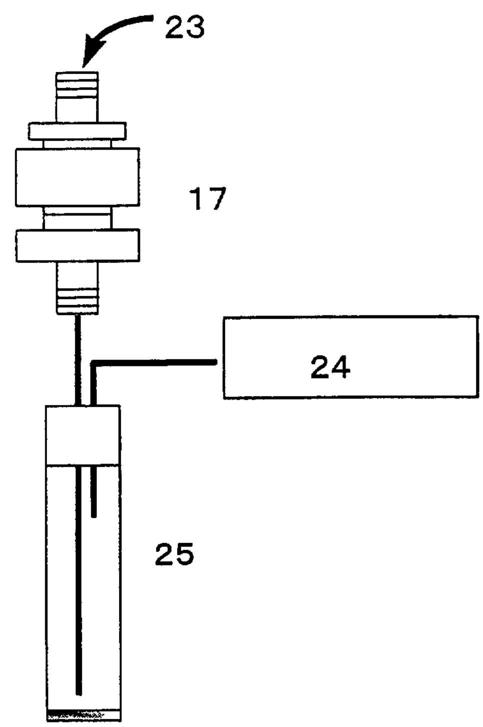


Fig.14

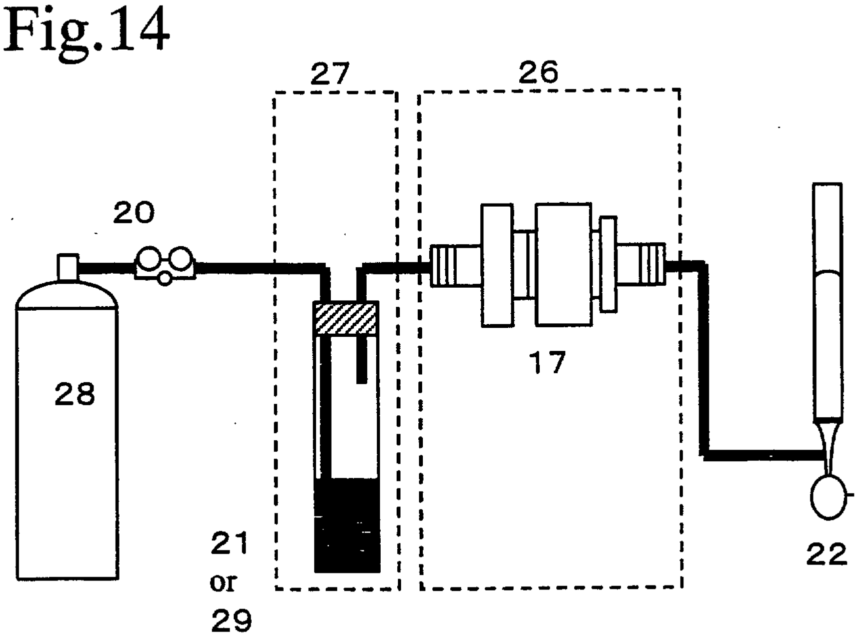

Fig.15

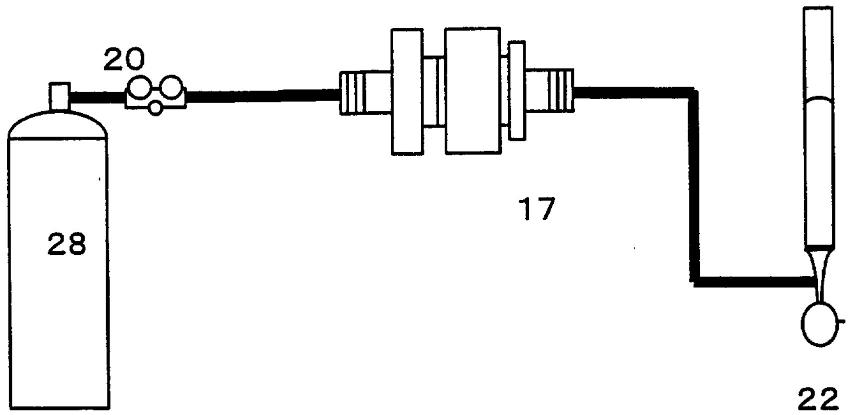


Fig.16

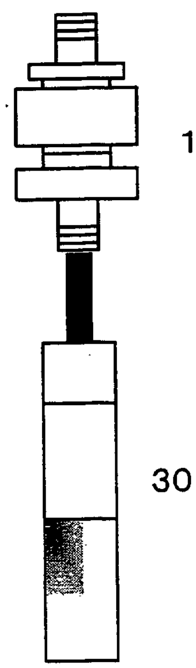

Fig.17

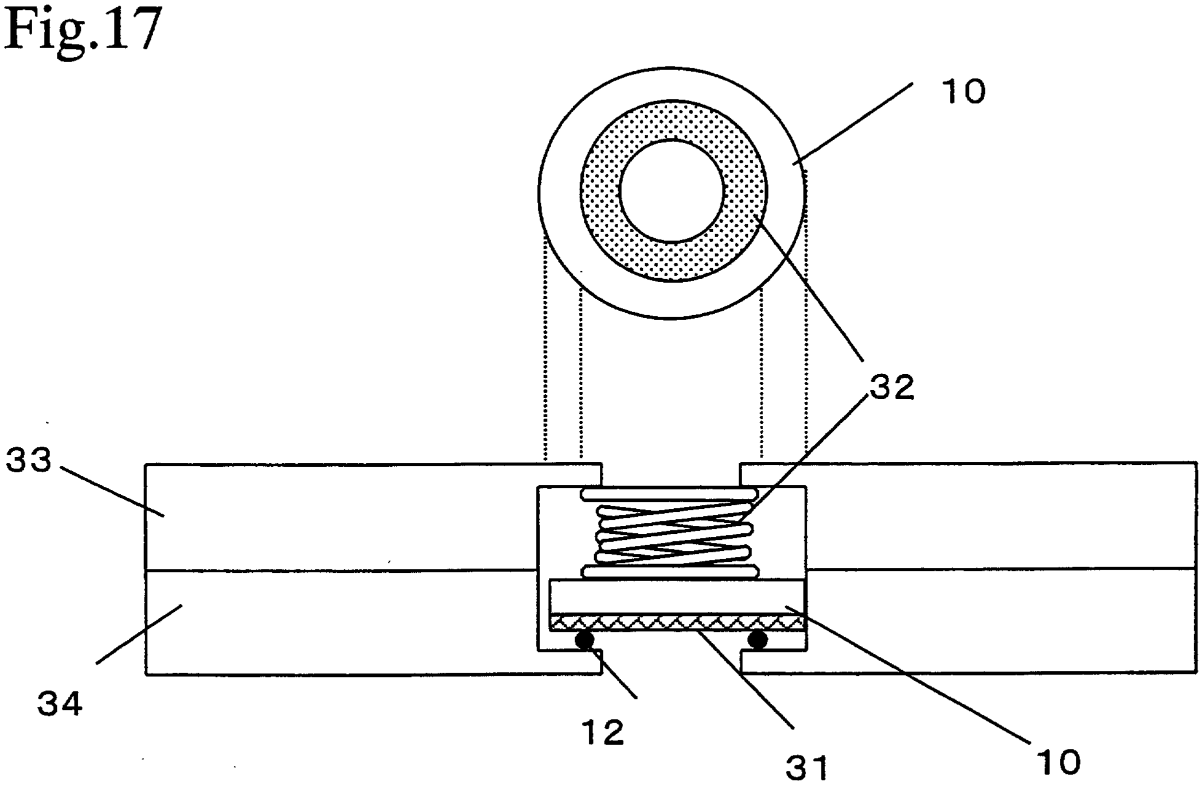

Fig.18

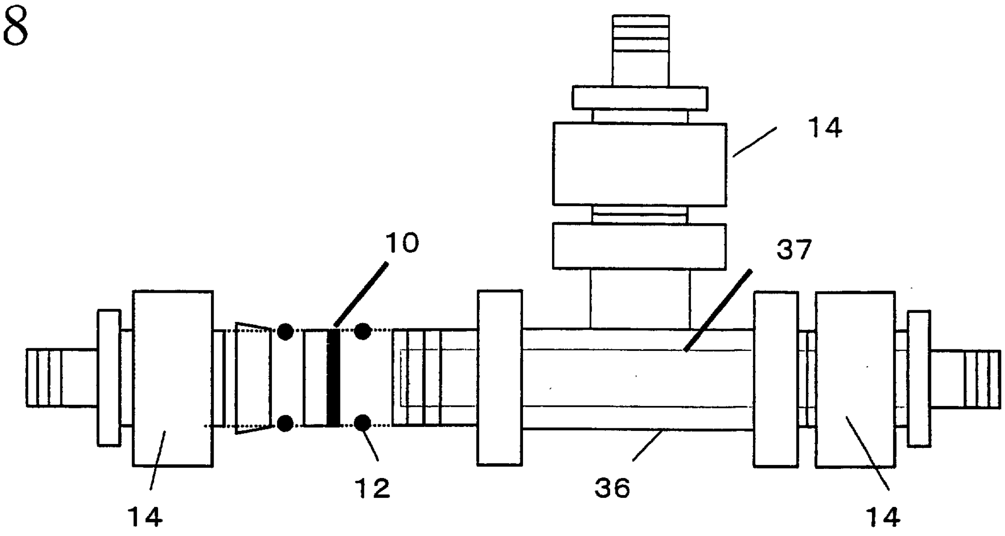


Fig.19

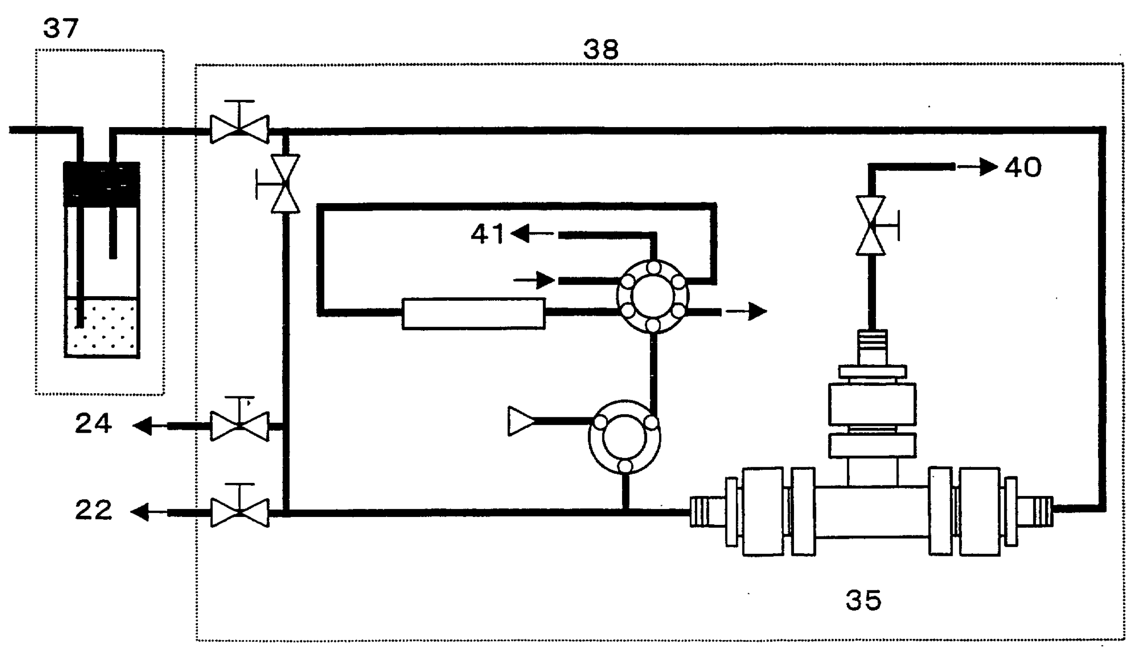

Fig.20

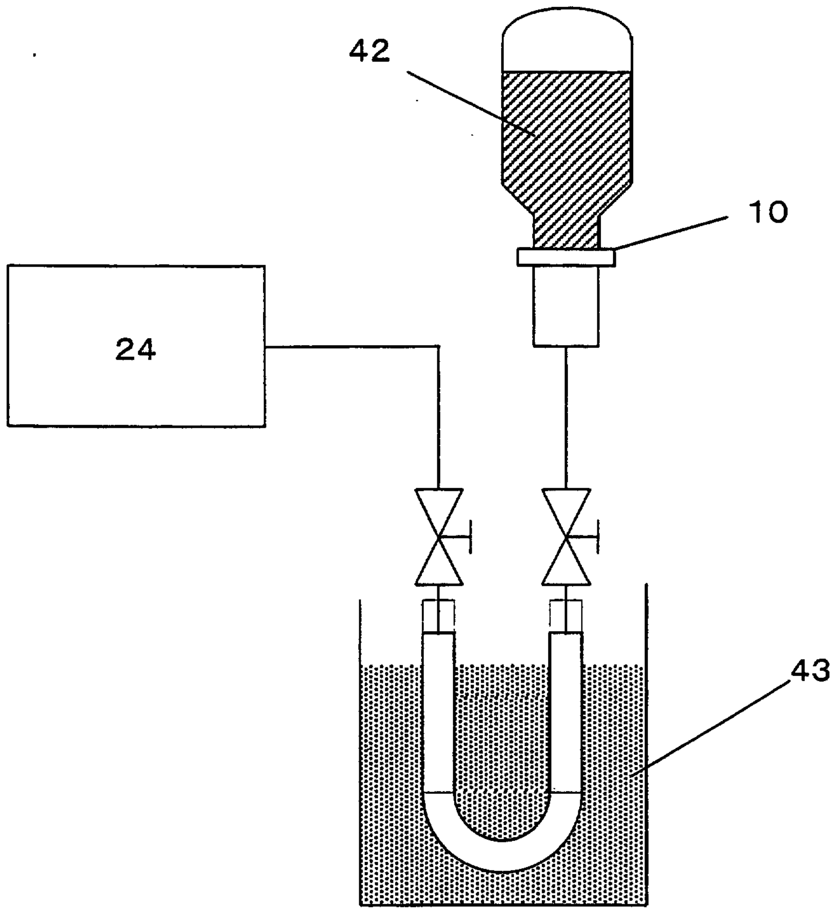

Fig.21